# EUROPEAN PATENT APPLICATION

(11) **EP 4 006 865 A1**
(43) Date of publication of application: **01.06.2022**
(21) Application number: 19945179.0
(22) Date of filing: 13.09.2019
(51) Int. Cl.: G08G 1/00, G06Q 50/30

(54) **VEHICLE CONTROL SYSTEM**

(71) Applicant: NTT Communications Corporation, Tokyo 100-8019 (JP); Tokyo Institute of Technology, Tokyo 152-8550 (JP)
(72) Inventor: KOBAYASHI Yoshiyuki, Tokyo 100-8019 (JP); TABATA Masaaki, Tokyo 100-8019 (JP); MUKASA Toshihide, Tokyo 100-8019 (JP); SUGAYA Tomohide, Tokyo 100-8019 (JP); WATANABE Hiromi, Tokyo 100-8019 (JP); OHYAMA Nagaaki, Tokyo 152-8550 (JP); OBI Takashi, Tokyo 152-8550 (JP); SUZUKI Hiroyuki, Tokyo 152-8550 (JP); TAIRA Naoko, Tokyo 152-8550 (JP); NARITA Kazumi, Tokyo 105-8445 (JP)
(74) Representative: Brevalex
(86) International application number: PCT/JP2019/036246
(87) International publication number: WO 2021/049040

(57) **Abstract**

A vehicle control system comprising: a determination unit that determines one scheduled-use vehicle from among candidate vehicles satisfying a use condition applied by a prospective user wishing to use a vehicle; a use permit generation unit that generates a use permit including user information and permission application information indicating permitted content for an application regarding use of a determined scheduled-use vehicle; an encryption unit that electronically signs the use permit by using a prescribed private key; a storage medium that stores the electronically signed use permit if the use permit has been determined to satisfy a prescribed condition indicating that the use permit is a legitimate use permit by using a public key corresponding to the private key; and a vehicle control unit that performs an action enabling a prospective user who is trying to use a determined vehicle to operate the vehicle on the basis of the permission application information if information stored in a personal identification medium that stores user information of the prospective user or information paired with user information and the user information included in the use permit satisfy a prescribed condition.

## Description

### TECHNICAL FIELD

The present invention relates to control technology for use of vehicles.

### BACKGROUND ART

In recent years, there has been a trend towards situations in which vehicles are utilized by multiple people, such as by car sharing or car rental. Conventionally, a vehicle was not able to be used without having the physical key of the vehicle. For this reason, the people who could use a vehicle were restricted by exchanging the physical key of the vehicle.

However, exchanging a physical key requires a procedure such as direct transfer or mailing between the transferor and the transferee, which is not very convenient. In response to this problem, a technology in which the exchange of physical keys is made unnecessary and convenience is improved by transmitting and receiving electronic temporary use privileges over a network has been proposed.

### Prior Art Document

### Patent Document

Patent Document 1: Japanese Examined Patent Application, First Publication No. 2019-133236

### SUMMARY OF INVENTION

### Problems to be solved by Invention

However, if a vehicle is used by a person having malicious intentions, then there is a risk of the owner of the vehicle suffering unexpected losses. For this reason, there was a need to improve security to ensure that use privileges of a vehicle would not be acquired illegitimately by a third party even if temporary.

In view of the above-mentioned circumstances, the present invention has the object of providing a technology that can more safely control the use of a vehicle by other people.

### Means for Solving the Problems

An aspect of the present invention is a vehicle control system comprising: a determination unit that determines one scheduled-use vehicle from among candidate vehicles satisfying a use condition applied by a prospective user wishing to use a vehicle; a use permit generation unit that generates a use permit including user information that is information specific to a user of a vehicle and permission application information indicating permitted content for an application regarding use of the scheduled-use vehicle determined by the determination unit; an encryption unit that electronically signs the use permit by using a prescribed private key; a storage medium that stores the electronically signed use permit if the use permit has been determined to satisfy a prescribed condition indicating that the use permit is a legitimate use permit by using a public key corresponding to the private key; and a vehicle control unit that performs an action enabling a prospective user who is trying to use a vehicle determined by the determination unit to operate the vehicle on the basis of the permission application information if information stored in a personal identification medium that stores user information of the prospective user or information paired with user information and the user information included in the use permit stored in the storage medium satisfy a prescribed condition.

An aspect of the present invention is the above-mentioned vehicle control system, wherein the storage medium is a storage medium in which electronic information indicating an automobile inspection certificate regarding the vehicle is recorded.

### Advantageous Effects of Invention

According to the present invention, the use of a vehicle by other people can be more safely controlled.

### BRIEF DESCRIPTION OF DRAWINGS

FIG. 1 is a schematic block diagram illustrating the system configuration of a control system 100 according to the present invention.
FIG. 2 is a diagram illustrating an example of the functional configuration of a personal identification medium 10.
FIG. 3 is a diagram illustrating an example of the functional configuration of a communication device 20.
FIG. 4 is a diagram illustrating an example of the functional configuration of a personal authentication device 30.
FIG. 5 is a diagram illustrating an example of the functional configuration of a vehicle authentication device 40.
FIG. 6 is a diagram illustrating an example of the functional configuration of a service management device 50.
FIG. 7 is a diagram illustrating an example of the functional configuration of a vehicle 60.
FIG. 8 is a diagram illustrating an example of the functional configuration of a vehicle identification medium 70.
FIG. 9 is a sequence chart illustrating an example of the basic actions of the control system 100.
FIG. 10 is a diagram illustrating the processing flow when a prospective user who wishes to use the vehicle 60 registers with the service management device 50.
FIG. 11 is a diagram illustrating the processing flow when a prospective user who wishes to use the vehicle 60 registers with the service management device 50.
FIG. 12 is a diagram illustrating the processing flow for a prospective provider who wishes to provide the vehicle 60 to acquire a vehicular electronic certificate that will be necessary when registering with the service management device 50.
FIG. 13 is a diagram illustrating the processing flow when a prospective provider who wishes to provide the vehicle 60 registers with the service management device 50.
FIG. 14 is a diagram illustrating the processing flow when a prospective provider who wishes to provide the vehicle 60 registers with the service management device 50.
FIG. 15 is a diagram illustrating the processing flow when a prospective provider who wishes to provide the vehicle 60 applies for provision to the service management device 50.
FIG. 16 is a diagram illustrating the processing flow when a prospective user who wishes to use the vehicle 60 applies for use to the service management device 50.
FIG. 17 is a diagram illustrating the processing flow when a prospective user who wishes to use the vehicle 60 applies for use to the service management device 50.
FIG. 18 is a diagram illustrating the processing flow when a prospective user whose use application information 522 is already registered uses the vehicle 60.
FIG. 19 is a diagram illustrating a specific example of the processing flow when a prospective user whose use application information 522 is already registered uses the vehicle 60.
FIG. 20 is a diagram illustrating another specific example of the processing flow when a prospective user whose use application information 522 is already registered uses the vehicle 60.
FIG. 21 is a diagram illustrating the processing flow when a substitute provider who wishes to provide a substitute driving service registers with the service management device 50.
FIG. 22 is a diagram illustrating the processing flow when a substitute provider who wishes to provide a substitute driving service registers with the service management device 50.
FIG. 23 is a diagram illustrating the processing flow for a substitute requester who wishes to request substitute driving of the vehicle 60 to acquire a vehicular electronic certificate that will be necessary when registering with the service management device 50.
FIG. 24 is a diagram illustrating the processing flow when a substitute requester who wishes to request substitute driving of the vehicle 60 registers with the service management device 50.
FIG. 25 is a diagram illustrating the processing flow when a substitute requester who wishes to request substitute driving of the vehicle 60 registers with the service management device 50.
FIG. 26 is a diagram illustrating the processing flow when a substitute requester who wishes to request substitute driving of the vehicle 60 applies to make a request to the service management device 50.
FIG. 27 is a diagram illustrating the processing flow when a substitute provider who wishes to substitute-drive the vehicle 60 applies for substitute driving to the service management device 50.
FIG. 28 is a diagram illustrating the processing flow when a substitute provider who wishes to substitute-drive the vehicle 60 applies for substitute driving to the service management device 50.
FIG. 29 is a diagram illustrating the processing flow when a substitute provider whose use application information 522 is already registered uses (substitute-drives) the vehicle 60.
FIG. 30 is a diagram illustrating the processing flow when a prospective driver who wishes to participate in freight transportation registers with the service management device 50.
FIG. 31 is a diagram illustrating the processing flow when a prospective driver who wishes to participate in freight transportation registers with the service management device 50.
FIG. 32 is a diagram illustrating the processing flow for a freight transportation requester who wishes to request driving of the vehicle 60 to acquire a vehicular electronic certificate that will be necessary when registering with the service management device 50.
FIG. 33 is a diagram illustrating the processing flow when a freight transportation requester who wishes to request driving of the vehicle 60 registers with the service management device 50.
FIG. 34 is a diagram illustrating the processing flow when a freight transportation requester who wishes to request driving of the vehicle 60 registers with the service management device 50.
FIG. 35 is a diagram illustrating the processing flow when a freight transportation requester who wishes to request driving of the vehicle 60 applies to make a request to the service management device 50.
FIG. 36 is a diagram illustrating the processing flow when a prospective driver who wishes to drive the vehicle 60 applies for driving to the service management device 50.
FIG. 37 is a diagram illustrating the processing flow when a prospective driver who wishes to drive the vehicle 60 applies for driving to the service management device 50.
FIG. 38 is a diagram illustrating the processing flow when a prospective driver whose use application information 522 is already registered uses (drives) the vehicle 60.

### MODES FOR CARRYING-OUT INVENTION

Hereinafter, examples of specific configurations of the present invention will be explained with reference to the drawings.

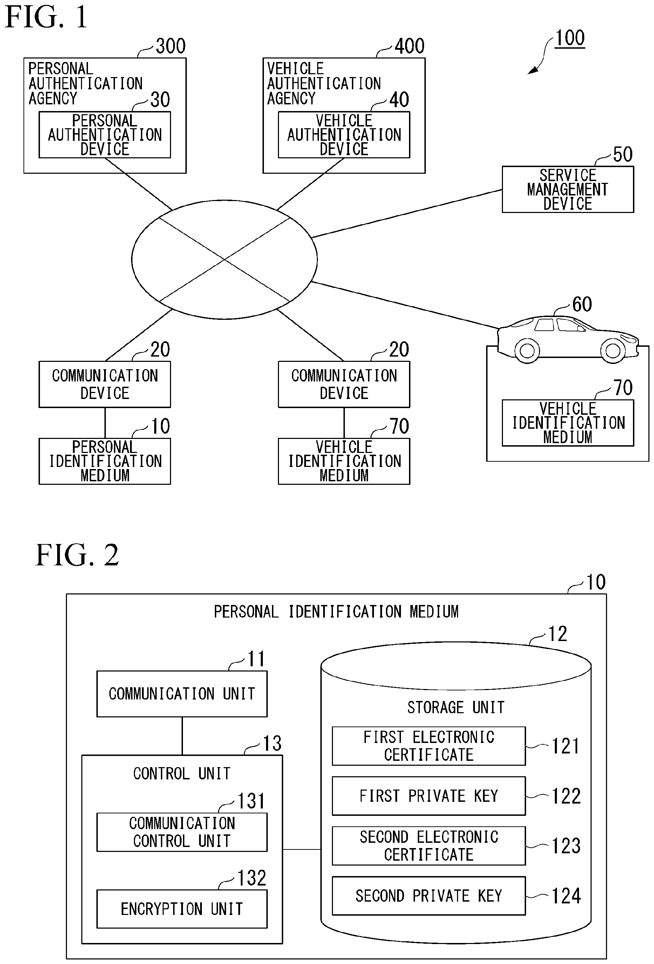

FIG. 1 is a schematic block diagram illustrating the system configuration of a control system 100 according to the present invention. The control system 100 includes a personal identification medium 10, communication devices 20, a personal authentication device 30, a vehicle authentication device 40, a service management device 50, a vehicle 60, and vehicle identification media 70. The personal identification medium 10 and the communication device 20 transmit and receive data by wired communication or wireless communication. The vehicle identification medium 70 and the communication device 20 transmit and receive data by wired communication or wireless communication. The vehicle identification medium 70 and the vehicle 60 transmit and receive data by wired communication or wireless communication. The communication devices 20, the personal authentication device 30, the vehicle authentication device 40, the service management device 50, and the vehicle 60 are communicably connected via a network. Some of the communication devices 20, the personal authentication device 30, the vehicle authentication device 40, the service management device 50, and the vehicle 60 may be configured to communicate via a network different from the network to which the other devices are connected. For example, the communication devices 20, the personal authentication device 30, the vehicle authentication device 40, the service management device 50, and the vehicle 60 may be communicably configured via the internet.

The personal authentication device 30 is operated by a personal authentication agency 300. The personal authentication agency 300 is an organization that can ensure that information indicating a person recorded in the personal identification medium 10 is genuine information by more than a prescribed standard. For example, the personal authentication agency 300 is an organization that, when issuing a personal identification medium 10, can perform verifications, with a certain level of strictness, regarding, for example, the fact that the application was made by the person him/herself and the transfer was made with respect to that person him/herself. The personal authentication agency 300 may, for example, be an administrative organization or an organization equivalent to an administrative organization (e.g., Japan Agency for Local Authority Information Systems). The personal authentication agency 300 may be a private organization as long as it is an organization that can perform the verifications with a certain level of strictness as mentioned above. A specific example of a personal identification medium 10 is a medium for personal identification (such as an individual number card in Japan) that is issued by, for example, a national government or an administrative organization with which the user is associated.

The vehicle authentication device 40 is operated by a vehicle authentication agency 400. The vehicle authentication agency 400 is preferably an organization that can ensure that information indicating a vehicle recorded in the vehicle identification media 70 is genuine information by more than a prescribed standard. For example, the vehicle authentication agency 400 is preferably an organization that, when issuing prescribed information to be recorded in the vehicle identification media 70, can perform verifications, with a certain level of strictness, regarding, for example, the fact that the application was made by the legitimate owner of that vehicle and the transfer is made with respect to that owner. The vehicle authentication agency 400 may be an organization that is operated, for example, by a company or a person that is involved with providing the control system 100. The vehicle authentication agency 400 may, for example, be an organization that is operated by a company or a person involved with operating the service management device 50. The vehicle authentication agency 400 may be a public organization as long as it is an organization that can perform the verifications with a certain level of strictness as mentioned above.

FIG. 2 is a diagram illustrating an example of the functional configuration of the personal identification medium 10. The personal identification medium 10 is, for example, a card-shaped medium in which an IC chip is installed. However, the mode of implementation of the personal identification medium 10 is not limited to the card-shaped medium mentioned above. For example, it may be implemented by using an information device such as a mobile phone, or may be implemented in a medium in which an RFID is installed (e.g., an article that is wearable on the human body or a portable article). The personal identification medium 10 is provided with a communication unit 11, a storage unit 12, and a control unit 13.

The communication unit 11 performs wired communication or wireless communication with other devices. Specific examples of the other devices with which the communication unit 11 can communicate are the communication devices 20. In the case in which the personal identification medium 10 is configured by using a contact-type IC chip, the communication unit 11 performs wired communication (communication through contacting portions), in accordance with a prescribed protocol, with the other device. In the case in which the personal identification medium 10 is configured by using a contactless IC chip such as an RFID, the communication unit 11 performs wireless communication, in accordance with a prescribed protocol, with the other device.

The storage unit 12 is configured by using a storage device such as a semiconductor storage device. The storage unit 12 stores a first electronic certificate 121, a first private key 122, a second electronic certificate 123, and a second private key 124. The first electronic certificate 121 may be issued, for example, by the personal authentication agency 300. The first electronic certificate 121 includes, for example, personal information, first identification information, and a first public key. The personal information is information regarding a real person to whom the personal identification medium 10 has been issued. The personal information may, for example, be four basic items of information (name, date of birth, gender, address). The first identification information is identification information that is uniquely assigned to the first electronic certificate. The first public key is a public key generated by public key cryptography. A specific example of the first electronic certificate 121 is an electronic signature certificate in an individual number card in Japan.

The first private key 122 is a private key generated by public key cryptography. The first private key 122 is a key corresponding to the first public key included in the first electronic certificate 121. The first private key 122 is a private key used when digitally signing a random number or an electronic document (or a hash value thereof). In other words, the first private key 122 is used to realize electronic authentication using public key infrastructure (PKI). The electronic document may be data indicating, for example, information applied to or information registered with the service management device 50.

The second electronic certificate 123 may be issued, for example, by the personal authentication agency 300. The second electronic certificate 123 is issued so as to be linked with the first electronic certificate 121. The second electronic certificate 123 may be configured, for example, so as not to include personal information. The second electronic certificate 123 includes, for example, second identification information and a second public key. The second identification information is identification information uniquely assigned to the second electronic certificate. The first identification information and the second identification number may not be the same information, but should preferably be stored so as to be linked in the personal authentication device 30. The second public key is a public key generated by public key cryptography. A specific example of the second electronic certificate 123 is an electronic certificate for user identification in an individual number card in Japan. It should be noted that in the description below, the first private key and the second private key shall be referred to collectively as personal private keys, and the first public key and the second public key will be referred to collectively as personal public keys. In the description below, when a personal private key is mentioned, just one of the first private key or the second private key may be included, or both may be included. In the description below, when a personal public key is mentioned, just one of the first public key or the second public key may be included, or both may be included.

The second private key 124 is a private key generated by public key cryptography. The second private key 124 is a key corresponding to the second public key included in the second electronic certificate 123. The second private key 124 is a private key used when digitally signing a random number or an electronic document (or a hash value thereof). In other words, the second private key 124 is used to realize electronic authentication using public key infrastructure (PKI). The electronic document may be data indicating, for example, information applied to or information registered with the service management device 50.

The control unit 13 is configured by using a processor. The control unit 13 functions as a communication control unit 131 and an encryption unit 132 by the processor executing a program. All or some of the functions of the control unit 13 may be realized by using hardware such as an application-specific integrated circuit (ASIC), a programmable logic device (PLD), or a field-programmable gate array (FPGA). The program may be recorded on a computer-readable recording medium. The computer-readable recording medium is, for example, a portable medium such as a flexible disk, a magneto-optic disk, a ROM, a CD-ROM, or a semiconductor storage device (e.g., a solid-state drive (SSD)), or a storage device, such as a hard disk or a semiconductor storage device, that is internal to a computer system. The program may be transmitted via an electrical communication line.

In response to a demand received from another device, the communication control unit 131 performs a personal first authentication process on the basis of personal first authentication information received from the other device. If the other device has been authenticated, then the communication control unit 131 notifies the encryption unit 132 of the demand by the other device. The communication control unit 131 transmits the information that has been processed by the encryption unit 132 to the other device. The personal first authentication information is information for verifying that the person who is trying to use the personal identification medium 10 is a legitimate user. The personal first authentication information may be information in any form, such as, for example, a code (e.g., a PIN code) of which a legitimate user has been notified in advance, or biometric information such as a fingerprint. The personal first authentication process is an authentication process for verifying that a person who is trying to use the personal identification medium 10 is a legitimate user on the basis of the personal first authentication information.

If a digital signature is demanded by the other device, then the encryption unit 132 uses the first private key 122 to digitally sign a random number or an electronic document (or a hash value thereof). The encryption unit 132 transmits the digitally signed data (e.g., a signed electronic document) to the other device via the communication unit 11. If a digital signature is demanded by the other device, the encryption unit 132 uses the second private key 124 to digitally sign a random number or an electronic document (or a hash value thereof). It should be noted that if another private key is recorded therein, then the encryption unit 132 may use the other private key to digitally sign a random number or an electronic document (or a hash value thereof). It should be noted that as mentioned above, the electronic document may be data indicating, for example, information applied to or information registered with the service management device 50.

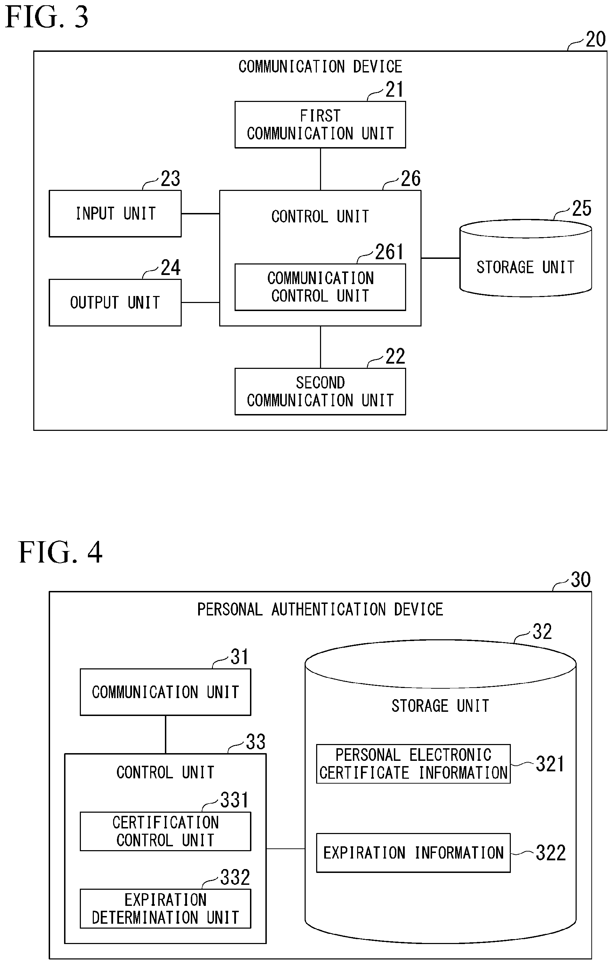

FIG. 3 is a diagram illustrating an example of the functional configuration of the communication device 20. The communication device 20 is an information processing device such as, for example, a personal computer, a smartphone, or a tablet. The communication device 20 may be an information device (dedicated device) that is configured to be able to be used only to execute a specific program. The specific program in this case may, for example, be a program for allowing a vehicle 60 to be used by making use of the personal identification medium 10, or may be a program for allowing the vehicle 60 to be provided to another person by making use of the vehicle identification medium 70. The communication device 20 is provided with: a first communication unit 21, a second communication unit 22, an input unit 23, an output unit 24, a storage unit 25, and a control unit 26.

The first communication unit 21 performs wired communication or wireless communication with other devices. Near-field communication may be employed in the first communication unit 21. Specific examples of other devices with which the first communication unit 21 can communicate include the personal identification medium 10 or the vehicle identification media 70. A communication scheme adapted to the communication scheme installed in the personal identification medium 10 or the vehicle identification media 70 that are the communication target is installed in the first communication unit 21. For example, the first communication unit 21 may be configured to use a communication interface for communicating with a contact-type IC chip or may be configured to use a communication interface for communicating with a contactless IC chip. The first communication unit 21 may be configured by using, for example, a so-called reader/writer.

The second communication unit 22 communicates with other devices through a network. The second communication unit 22 may be configured by using a so-called network interface. Specific examples of other devices with which the second communication unit 22 can communicate include the personal authentication device 30, the vehicle authentication device 40, the service management device 50, and the vehicle 60.

The input unit 23 is configured by using an existing input device such as a keyboard, a pointing device (such as a mouse or a tablet), buttons, a touch panel, or the like. The input unit 23 may be configured by using a device for acquiring biometric information of a user and inputting the same to the communication device 20. The input unit 23 is operated by a user when inputting instructions of the user to the communication device 20. The input unit 23 may be an interface for connecting the input device with the communication device 20. In this case, the input unit 23 inputs, to the communication device 20, an input signal generated in accordance with the input of the user to the input device. The input unit 23 may be configured by using a microphone and a speech recognition device. In this case, the input unit 23 performs voice recognition on words spoken by the user and inputs character string information, which is the recognized results, to the communication device 20. The input unit 23 may be configured in any manner as long as the configuration allows instructions of the user to be input to the communication device 20.

The output unit 24 is configured by using an output device and outputs data to the user of the communication device 20. The output device may be configured by using, for example, a device that outputs images and/or characters on a screen. For example, the output device may be configured by using a cathode ray tube (CRT), a liquid crystal display, an organic electro-luminescent (EL) display, or the like. Additionally, the output device may be configured by using a device for converting text into speech and outputting the same. In this case, the output device can be configured by using a voice synthesis device and a voice output device (speaker). The output unit 24 may be an interface for connecting the output device with the communication device 20. The output unit 24 may output, for example, permission application information included in a use permit read out from the vehicle identification medium 70 by the communication control unit 261.

The storage unit 25 is configured by using a storage device such as a magnetic hard disk device or a semiconductor storage device. The storage unit 25 stores, for example, data and programs necessary for the communication device 20 to operate.

The control unit 26 is configured by using a processor such as a central processing unit (CPU). The control unit 26 functions as the communication control unit 261 by executing a program. All or some of the functions of the control unit 26 may be realized by using hardware such as an ASIC, a PLD, an FPGA, or the like. The program may be recorded on a computer-readable recording medium. The computer-readable recording medium is, for example, a portable medium such as a flexible disk, a magneto-optic disk, a ROM, a CD-ROM, or a semiconductor storage device (e.g., an SSD), or a storage device, such as a hard disk or a semiconductor storage device, that is internal to a computer system. The program may be transmitted via an electrical communication line.

The communication control unit 261 controls the first communication unit 21 or the second communication unit 22 and communicates with other devices in accordance with instructions of the user input via the input unit 23. The communication control unit 261 outputs information to the user via the output unit 24 in accordance with information received from the other devices. For example, if a user is operating the communication device 20 with the purpose of applying to use the vehicle 60, then the communication control unit 261 makes the above-mentioned application to the service management device 50 by communicating with other devices.

FIG. 4 is a diagram illustrating an example of the functional configuration of the personal authentication device 30. The personal authentication device 30 is, for example, an information processing device such as a personal computer or a server device. The hardware of the personal authentication device 30 may be physically protected with a high level of security. The personal authentication device 30 is provided with a communication unit 31, a storage unit 32, and a control unit 33.

The communication unit 31 communicates with other devices through a network. The communication unit 31 may be configured by using a so-called network interface. Specific examples of other devices with which the communication unit 31 can communicate include the communication devices 20, the vehicle authentication device 40, the service management device 50, and the vehicle 60.

The storage unit 32 is configured by using a storage device such as a magnetic hard disk device or a semiconductor storage device. The storage device 32 stores, for example, personal electronic certificate information 321 and expiration information 322. The personal electronic certificate information 321 includes first electronic certificates 121 and second electronic certificates 123 that have been issued in the past. The personal electronic certificate information 321 has the first electronic certificates 121 and the second electronic certificates 123 that have been issued to the same person in linked form. The personal electronic certificate information 321 may further include first private keys 122 and second private keys 124. The expiration information 322 is information regarding the expiration of the first electronic certificates 121 and the second electronic certificates 123 that have been issued in the past to the personal identification medium 10.

The control unit 33 is configured by using a processor such as a CPU. The control unit 33 functions as a certification control unit 331 and an expiration determination unit 332 by executing a program. All or some of the functions of the control unit 33 may be realized by using hardware such as an ASIC, a PLD, an FPGA, or the like. The program may be recorded on a computer-readable recording medium. The computer-readable recording medium is, for example, a portable medium such as a flexible disk, a magneto-optic disk, a ROM, a CD-ROM, or a semiconductor storage device (e.g., an SSD), or a storage device, such as a hard disk or a semiconductor storage device, that is internal to a computer system. The program may be transmitted via an electrical communication line.

The certification control unit 331 performs processes relating to the issuance and expiration of the personal electronic certificate information 321. The expiration determination unit 332 determines whether or not first electronic certificates 121 or second electronic certificates 123 being processed are expired in response to expiration determination demands received from other devices via the communication unit 31. The expiration determination unit 332 transmits determination results to the other devices that are the sources of the demands.

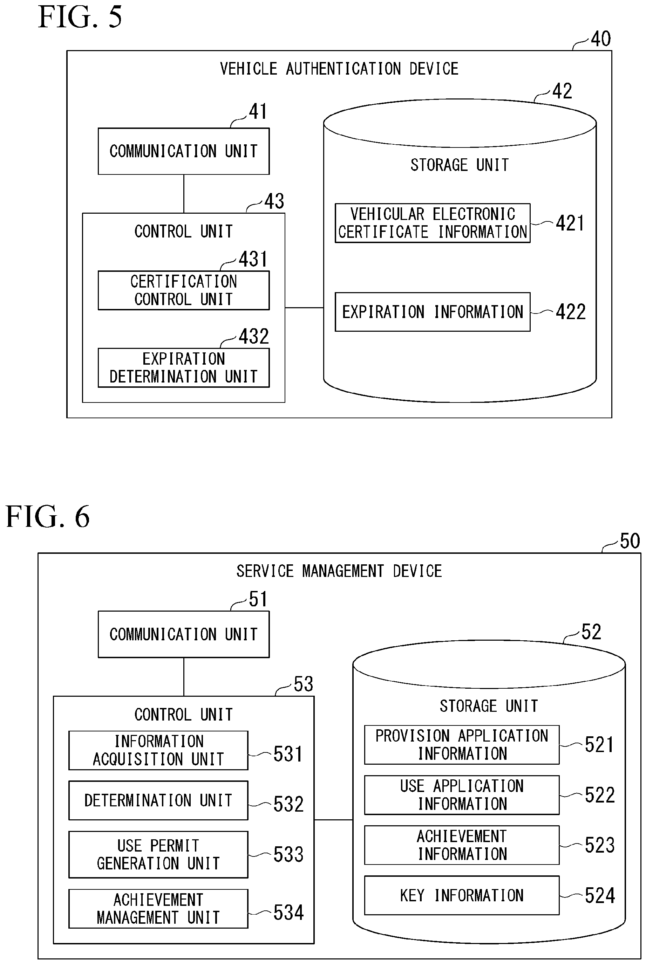

FIG. 5 is a diagram illustrating an example of the functional configuration of the vehicle authentication device 40. The vehicle authentication device 40 is, for example, an information processing device such as a personal computer or a server device. The hardware of the vehicle authentication device 40 may be physically protected with a high level of security. The vehicle authentication device 40 is provided with a communication unit 41, a storage unit 42, and a control unit 43.

The communication unit 41 communicates with other devices through a network. The communication unit 41 may be configured by using a so-called network interface. Specific examples of other devices with which the communication unit 41 can communicate include the communication devices 20, the personal authentication device 30, the service management device 50, and the vehicle 60.

The storage unit 42 is configured by using a storage device such as a magnetic hard disk device or a semiconductor storage device. The storage unit 42 stores, for example, vehicular electronic certificate information 421 and expiration information 422. The vehicular electronic certificate information 421 includes information regarding vehicular electronic certificates 724 that have been issued in the past. The vehicular electronic certificate information 421 may further include vehicle private keys 725. The expiration information 422 is information regarding the expiration of the vehicular electronic certificates 724 that have been issued in the past to vehicle identification media 70.

The control unit 43 is configured by using a processor such as a CPU. The control unit 43 functions as a certification control unit 431 and an expiration determination unit 432 by executing a program. All or some of the functions of the control unit 43 may be realized by using hardware such as an ASIC, a PLD, an FPGA, or the like. The program may be recorded on a computer-readable recording medium. The computer-readable recording medium is, for example, a portable medium such as a flexible disk, a magneto-optic disk, a ROM, a CD-ROM, or a semiconductor storage device (e.g., an SSD), or a storage device, such as a hard disk or a semiconductor storage device, that is internal to a computer system. The program may be transmitted via an electrical communication line.

The certification control unit 431 performs processes relating to the issuance and expiration of the vehicular electronic certificate information 421. The expiration determination unit 432 determines whether or not vehicular electronic certificate information 421 being processed is expired in response to expiration determination demands received from other devices via the communication unit 41. The expiration determination unit 432 transmits determination results to the other devices that are the sources of the demands.

FIG. 6 is a diagram illustrating an example of the functional configuration of the service management device 50. The service management device 50 is, for example, an information processing device such as a personal computer or a server device. The service management device 50 is provided with a communication unit 51, a storage unit 52, and a control unit 53.

The communication unit 51 communicates with other devices through a network. The communication unit 51 may be configured by using a so-called network interface. Specific examples of other devices with which the communication unit 51 can communicate include the communication devices 20, the personal authentication device 30, the vehicle authentication device 40, and the vehicle 60.

The storage unit 52 is configured by using a storage device such as a magnetic hard disk device or a semiconductor storage device. The storage device 52 stores, for example, provision application information 521, use application information 522, achievement information 523, and key information 524.

The provision application information 521 is information applied relating to provision of a vehicle 60. The provision application information 521 includes, for example, information regarding the vehicle 60 to be provided, information regarding a location at which the vehicle 60 is to be provided, and information indicating the time period for which the vehicle 60 is to be provided (e.g., information indicating a date/time at which provision can start and a date/time at which provision will end). In addition thereto, the provision application information 521 may include information indicating restrictions relating to use of the vehicle 60. For example, the provision application information 521 may include information regarding smoking in the vehicle 60, and information regarding geographical areas and/or environments (such as road surface states, types of roads, and weather) in which the vehicle 60 can be used. It should be noted that the provision of the vehicle 60 may be realized in any form. For example, the vehicle 60 may be provided from the person owning the vehicle 60 to a person wishing to borrow and use the vehicle 60 (car sharing). For example, the person owning the vehicle 60 may provide the vehicle 60 to a person who will substitute-drive the vehicle 60 (substitute driving). For example, the vehicle 60, serving as a freight transportation means, may be provided to a driver contracted to drive the vehicle 60 from a first point to a different second point (relay freight transportation).

The use application information 522 is information regarding applications for which scheduled use of the vehicle 60 has been decided, among applications for the use of a vehicle 60. The use application information 522 includes, for example, information regarding users, information regarding the vehicles 60 that are scheduled to be used, information regarding locations at which use is to start, and information indicating time periods during which the vehicles 60 are to be used (e.g., information indicating dates/times at which use is to start and dates/times at which use will end).

The achievement information 523 is information regarding the achievement of use of the vehicles 60. The achievement information 523 includes, for example, information regarding users who have actually used the vehicles 60, information regarding vehicles 60 that have actually been used, information regarding locations at which use actually started, and information regarding the time periods during which the vehicles 60 were actually used (e.g., information indicating dates/times at which use actually started and dates/times at which use actually ended). The achievement information 523 may further include the routes traveled by the vehicles 60 that were used.

The key information 524 includes a public key (hereinafter referred to as a "service public key") and a private key (hereinafter referred to as a "service private key") that are used in the service management device 50. The service public key included in the key information 524 is included in use permits. The service private key included in the key information 524 is used to digitally sign the use permits. The service private key included in the key information 524 may also be recorded in the vehicle identification media 70.

The control unit 53 is configured by using a processor such as a CPU. The control unit 53 functions as an information acquisition unit 531, a determination unit 532, a use permit generation unit 533, and an achievement management unit 534 by executing a program. All or some of the functions of the control unit 53 may be realized by using hardware such as an ASIC, a PLD, an FPGA, or the like. The program may be recorded on a computer-readable recording medium. The computer-readable recording medium is, for example, a portable medium such as a flexible disk, a magneto-optic disk, a ROM, a CD-ROM, or a semiconductor storage device (e.g., an SSD), or a storage device, such as a hard disk or a semiconductor storage device, that is internal to a computer system. The program may be transmitted via an electrical communication line.

The information acquisition unit 531 acquires the provision application information 521 or information regarding use applications on the basis of applications for provision or applications for use received from devices such as a communication device 20. The information acquisition unit 531 may, for example, transmit to a device, such as the communication device 20, data of a screen for an application that has input boxes for inputting information necessary for the application, and may acquire information necessary for the application by receiving values input to the input boxes. The information acquisition unit 531 records the acquired information in the storage unit 52.

The determination unit 532, on the basis of the provision application information 521 and the information regarding applications for use, links provision applications and use applications satisfying a prescribed condition, and determines information regarding the use of vehicles 60. The determination unit 532 generates use application information 522 on the basis of the determination. The determination unit 532 records the generated use application information 522 in the storage unit 52. For example, in the case of car sharing, on the basis of information regarding an application for use acquired by the information acquisition unit 531, the provision application information 521 in accordance with the application for use is searched. In the case in which there is provision application information 521 in accordance with the condition for use that has been applied and for which a reservation has not been made, that provision application information 521 is determined as information regarding a vehicle 60 to be provided to the applicant for use. The determination unit 532 generates use application information 522 on the basis of the determined provision application information 521 and the information acquired with the application for use. The determination unit 532 records the generated use application information 522 in the storage unit 52.

When a vehicle 60 to be provided is determined in the determination unit 532, the use permit generation unit 533 generates a use permit including information regarding the permitted use regarding that vehicle 60. The use permit may, for example, include some or all of the use application information 522. That is, the use permit may, for example, include information regarding the user, information regarding the vehicle 60 that is scheduled to be used, information regarding the location at which the use is to start, and information indicating the time period of the use. For example, the use permit may include the personal public key recorded in the personal identification medium 10 of the user. The use permit may further include the service public key included in the key information 524. The use permit generation unit 533 uses the service private key included in the key information 524 to digitally sign the use permit. Then, the use permit generation unit 533 transmits the digitally signed use permit to the vehicle 60 that is to be used on the basis of that use permit.

The achievement management unit 534 acquires information regarding the achievement of use of the vehicle 60 to which the use permit has been transmitted, and records the same in the storage unit 52 as the achievement information 523. The achievement management unit 534 may, for example, acquire information regarding routes traveled by the used vehicle 60 by periodically acquiring position information from the vehicle 60 being used. The achievement management unit 534 may further acquire times of passage of the vehicle 60 at positions on the routes and may record these as the achievement information 523.

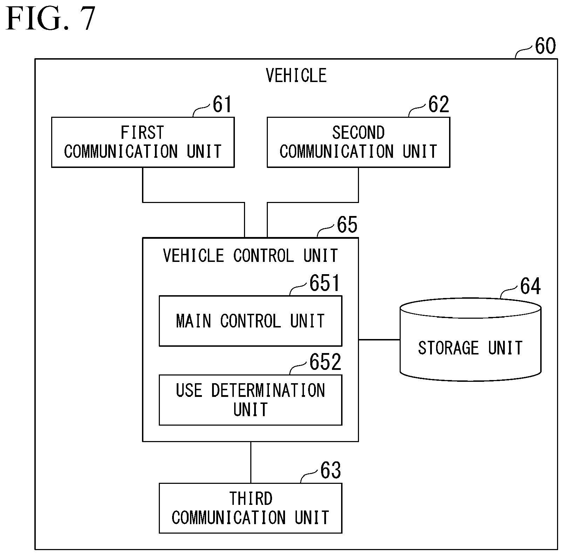

FIG. 7 is a diagram illustrating an example of the functional configuration of the vehicle 60. The vehicle 60 is a moving body that can be used by a person as transport means. The vehicle 60 may, for example, be a moving body provided with one or more wheels, such as a motorcycle, an automobile, or a bicycle. The vehicle 60 may be a moving body provided with movement means that are different from wheels (e.g., a drivable sphere). Though not illustrated in FIG. 7, the vehicle 60 is provided with various devices that are necessary for a moving body. These devices are controlled by the vehicle control unit 65 mentioned below. In addition to these devices, the vehicle 60 is further provided with a first communication unit 61, a second communication unit 62, a third communication unit 63, a storage unit 64, and a vehicle control unit 65.

The first communication unit 61 performs wired communication or wireless communication with other devices. Near-field communication may be employed in the first communication unit 61. Specific examples of other devices with which the first communication unit 61 can communicate are the vehicle identification media 70. The first communication unit 61 may be configured similarly with the first communication unit 21 of the communication device 20.

The second communication unit 62 communicates with other devices through a network. The second communication unit 62 may be configured by using a so-called network interface. Specific examples of other devices with which the second communication unit 62 can communicate include the communication devices 20, the personal authentication device 30, the vehicle authentication device 40, and the service management device 50.

The third communication unit 63 performs wired communication or wireless communication with other devices. Near-field communication may be employed in the third communication unit 63. A specific example of another device with which the third communication unit 63 can communicate is the personal identification medium 10. The third communication unit 63 may be configured similarly with the first communication unit 21 of the communication device 20.

The storage unit 64 is configured by using a storage device such as a magnetic hard disk device or a semiconductor storage device. The storage unit 64 stores, for example, data and programs necessary for the vehicle control unit 65 to operate.

The vehicle control unit 65 is configured by using a processor such as a CPU. The vehicle control unit 65 functions as a main control unit 651 and a use determination unit 652 by executing a program. All or some of the functions of the vehicle control unit 65 may be realized by using hardware such as an ASIC, a PLD, an FPGA, or the like. The program may be recorded on a computer-readable recording medium. The computer-readable recording medium is, for example, a portable medium such as a flexible disk, a magneto-optic disk, a ROM, a CD-ROM, or a semiconductor storage device (e.g., an SSD), or a storage device, such as a hard disk or a semiconductor storage device, that is internal to a computer system. The program may be transmitted via an electrical communication line.

The main control unit 651 controls general functions for the vehicle 60 to function as a moving body. The main control unit 651 controls, for example, the locking and unlocking of door locks provided in the vehicle 60, the turning of the engine of the vehicle 60 on and off, the operations of the engine of the vehicle 60, the transmission, and the like.

The use determination unit 652 determines whether the person making a demand to use the vehicle 60 should be permitted to use. If it is determined that the demand to use is made by a person who should be permitted to use, then the use determination unit 652 instructs the main control unit 651 to allow use of the vehicle 60. The main control unit 651 that has received the instruction to allow use performs control to allow use (operation) of the vehicle 60. For example, the main control unit 651 unlocks the door which had been locked, and turns the engine on. Then, the main control unit 651 unlocks the steering wheel and controls various devices so as to allow the user to freely drive the vehicle 60.

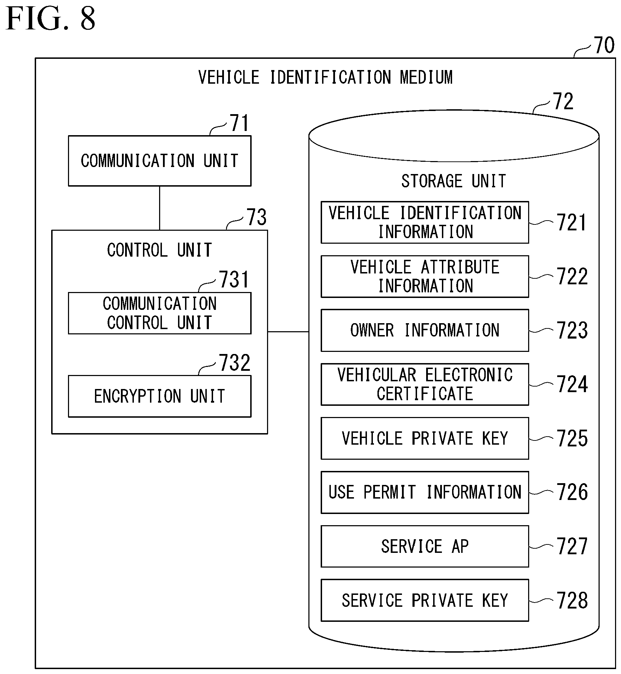

FIG. 8 is a diagram illustrating an example of the functional configuration of the vehicle identification medium 70. The vehicle identification medium 70 is, for example, a card-shaped medium in which an IC chip is installed. However, the mode of implementation of the vehicle identification medium 70 is not limited to the card-shaped medium mentioned above. For example, the vehicle identification medium 70 may be implemented by using an information device such as a mobile phone, or may be implemented in a medium in which an RFID is installed (e.g., an article that is wearable on the human body or a portable article). For example, the vehicle identification medium 70 may be incorporated into a portion of the body of the vehicle 60, or may be incorporated into an on-board device installed in the vehicle 60. The vehicle identification medium 70 may, for example, be a dedicated medium in which an automobile inspection certificate is recorded. The vehicle identification medium 70 is provided with a communication unit 71, a storage unit 72, and a control unit 73.

The communication unit 71 performs wired communication or wireless communication with other devices. Specific examples of other devices with which the communication unit 71 can communicate include the communication devices 20 and the vehicle 60. In the case in which the vehicle identification medium 70 is configured by using a contact-type IC chip, the communication unit 71 performs wired communication (communication through contacting portions), in accordance with a prescribed protocol, with the other device. In the case in which the vehicle identification medium 70 is configured by using a contactless IC chip such as an RFID, the communication unit 71 performs wireless communication, in accordance with a prescribed protocol, with the other device.

The storage unit 72 is configured by using a storage device such as a semiconductor storage device. The storage unit 72 stores vehicle identification information 721, vehicle attribute information 722, owner information 723, a vehicular electronic certificate 724, a vehicle private key 725, user permit information 726, a service AP 727, and a service private key 728.

The vehicle identification information 721 is identification information for uniquely identifying the vehicle 60. However, the vehicle identification information 721 does not need to be able to uniquely identify the vehicle 60 worldwide, and only needs to uniquely identify the vehicle 60 in a prescribed geographical area (e.g., a specific administrative zone, a prescribed country (e.g., in Japan), etc.). For example, an automobile registration number, a chassis number, or the like used in an automobile inspection certificate may be used as the vehicle identification information.

The vehicle attribute information 722 indicates attribute information for the vehicle. The vehicle attribute information 722 is not necessarily required to be limited to a single value. The vehicle attribute information 722 may, for example, be a value of a category used in an automobile inspection certificate, such as the shape of the body and the vehicle weight.

The owner information 723 is information indicating the owner of the vehicle. For the owner information 723, for example, the first identification information in the first electronic certificate 121 and/or the second identification information in the second electronic certificate 123 may be used as the owner information 723.

The vehicular electronic certificate 724 and the vehicle private key 725 are issued by the certification control unit 431. The vehicle private key 725 is a private key generated by public key cryptography. The vehicle private key 725 is a key corresponding to the vehicle public key included in the vehicular electronic certificate 724. The vehicle private key 725 is a private key used when digitally signing a random number or an electronic document (or a hash value thereof).

The use permit information 726 is issued by the use permit generation unit 533 of the service management device 50. The service AP 727 is a program of an application used for services by the service management device 50. The service private key 728 is a private key that is issued by the service management device 50 and recorded in the vehicle identification medium 70.

The control unit 73 is configured by using a processor. The control unit 73 functions as a communication control unit 731 and an encryption unit 732 by the processor executing a program. All or some of the functions of the control unit 73 may be realized by using hardware such as an ASIC, a PLD, an FPGA, or the like. The program may be recorded on a computer-readable recording medium. The computer-readable recording medium is, for example, a portable medium such as a flexible disk, a magneto-optic disk, a ROM, a CD-ROM, or a semiconductor storage device (e.g., an SSD), or a storage device, such as a hard disk or a semiconductor storage device, that is internal to a computer system. The program may be transmitted via an electrical communication line.

The communication control unit 731 performs authentication demands with respect to other devices in response to demands received from the other devices. The communication control unit 731 performs authentication processes on the basis of authentication information received from the other devices. If another device is authenticated, then the communication control unit 731 notifies the encryption unit 732 of the demand by the other device. The communication control unit 731 transmits information processed by the encryption unit 732 to the other device.

When a digital signature is demanded by another device, the encryption unit 732 uses the vehicle private key 725 to digitally sign a random number or an electronic document (or a hash value thereof). The encryption unit 732 transmits the digitally signed data to the other device via the communication unit 71.

The control unit 73 may perform processes relating to the use and provision of services by executing the service AP 727.

### [Basic Actions]

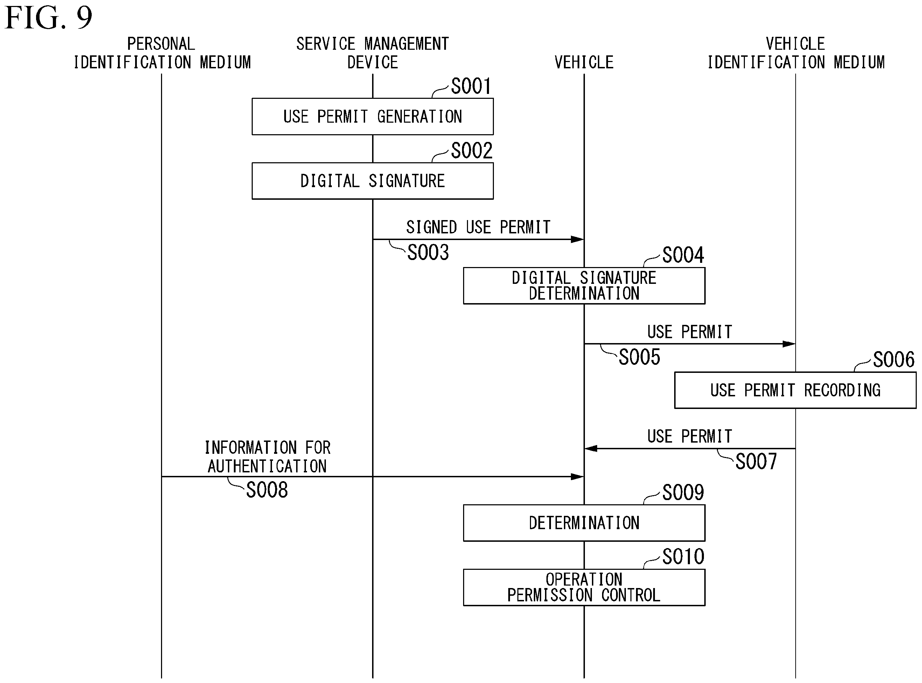

FIG. 9 is a sequence chart illustrating an example of the basic actions of the control system 100. The service management device 50 generates a use permit (step S001) and digitally signs the use permit (step S002). The service management device 50 transmits the signed use permit to the communication device 20 or the vehicle 60 connected to the vehicle identification medium 70 that is a target for the use permit (step S003). In FIG. 9, the signed use permit is transmitted to the vehicle 60. Upon receiving the signed use permit, the vehicle 60 uses the vehicle public key to determine whether or not there has been tampering of the signed use permit that has been received (step S004). If tampering has occurred, then the vehicle 60 suspends the process. Conversely, if tampering has not occurred, then the vehicle 60 performs an action for writing the use permit into the vehicle identification medium 70 that is connected thereto (step S005). The control unit 73 of the vehicle identification medium 70 records the use permit in the storage unit 72 in accordance with control by the vehicle 60 (step S006).

Thereafter, if a user having a personal identification medium 10 storing the user identification information (e.g., the second electronic certificate 123) included in the use permit attempts to use the vehicle 60, the vehicle 60 reads out, from the vehicle identification medium 70 connected to the vehicle 60, the use permit itself recorded therein, or information included in the use permit (step S007). The personal identification medium 10 of the user transmits information used for authentication (information for authentication) (step S008). Thereafter, if a prescribed condition indicating that the user is a legitimate user (the user to whom the use permit was issued) is satisfied, then the vehicle 60 determines that use of the vehicle 60 is to be permitted (step S009). Conversely, if the prescribed condition mentioned above is not satisfied, then the vehicle 60 determines that the use thereof will not be permitted. Depending on these determination results, the main control unit 651 of the vehicle 60 performs actions allowing the vehicle 60 to be used (step S010).

A specific example of the determination by the vehicle 60 will be explained. The vehicle 60 acquires a personal public key from the use permit acquired from the vehicle identification medium 70. The vehicle 60 generates basic information for authentication by a specific method. For example, the vehicle 60 may generate a random number as the basic information for authentication. In this case, the vehicle 60 transmits the random number to the personal identification medium 10. The personal identification medium 10 uses a personal private key to encrypt the random number, thereby generating information for authentication, and outputs the same to the vehicle 60. The vehicle 60 decrypts the information for authentication acquired from the personal identification medium 10 with the personal public key. The vehicle 60 determines whether or not the generated random number and the decrypted value match. If they match, then the vehicle 60 determines that the use of the vehicle 60 is permitted. If they do not match, then the vehicle 60 determines that the use of the vehicle 60 is not permitted. It should be noted that the determination process in the vehicle 60 is not limited to the specific example mentioned above.

### [Car sharing]

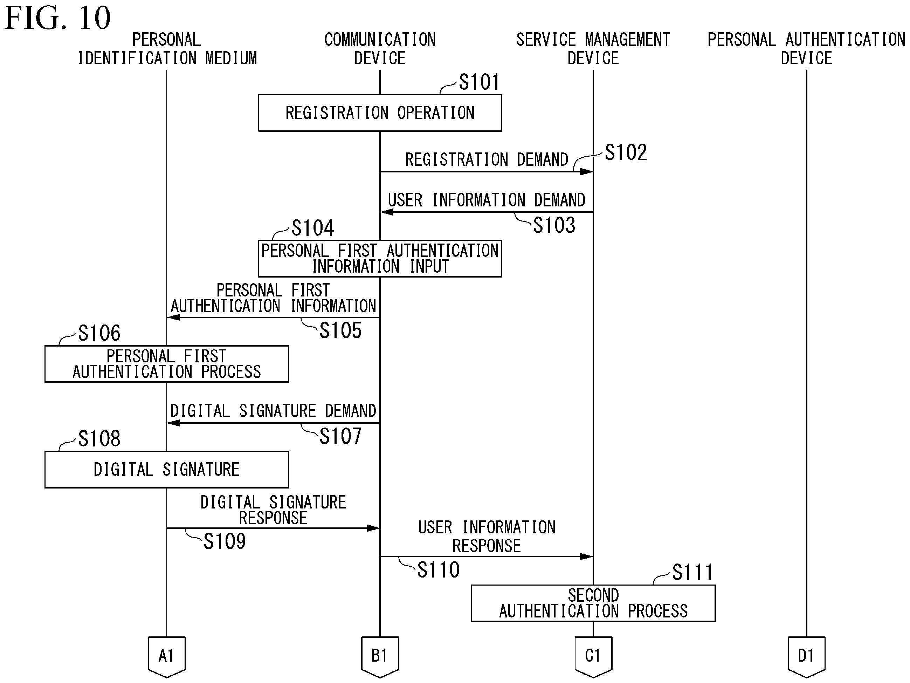

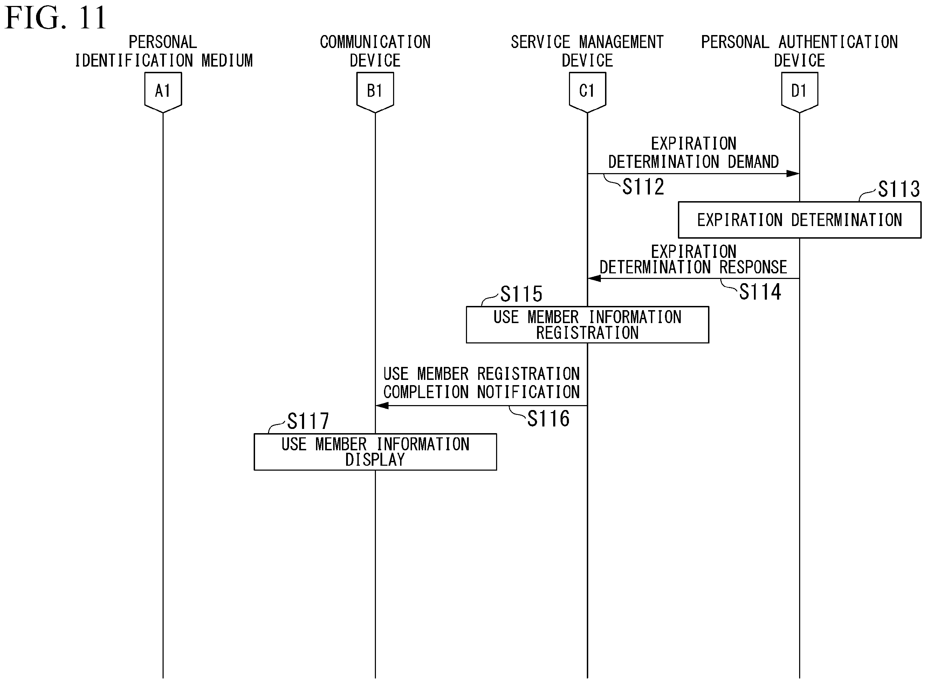

FIG. 10 to FIG. 18 are sequence charts illustrating specific examples of the flow of actions in the case in which the control system 100 is applied to car sharing. First, FIG. 10 and FIG. 11 will be used to explain the processing flow when a prospective user who wishes to use the vehicle 60 registers with the service management device 50. The prospective user is a person who wishes to borrow and drive a vehicle 60 owned by another person in car sharing. Additionally, the service management device 50 may be operated by a mediating business or the like for connecting prospective users with the prospective providers to be described below in car sharing. First, a prospective user performs operations on the input unit 23 of the communication device 20 to register with the service management device 50 (step S101). The communication device 20 transmits a registration demand to the service management device 50 in accordance with the operations by the prospective user (step S102). Upon receiving the registration demand, the service management device 50 transmits a user information demand to the communication device 20 in accordance with the registration demand that has been received (step S103). The user information demand is a demand for information (user information) specific to the prospective user. The user information may, for example, be a first electronic certificate 121.

Upon receiving the user information demand, the communication device 20 makes the output unit 24 output a display prompting the input of personal first authentication information. The prospective user inputs the personal first authentication information by operating the input unit 23 (step S104). The personal first authentication information may, for example, be a preset PIN code. The communication device 20 transmits the personal first authentication information that has been input by means of the input unit 23 to the personal identification medium 10 (step S105). The personal identification medium 10 executes an authentication process on the basis of the personal first authentication information that has been received (step S106). The communication device 20 demands, from the personal identification medium 10, a digital signature regarding the user information to be registered (step S107). The user information to be registered is information regarding the prospective user. The user information may include information on the user (e.g., name, age, address, gender, etc.) input to the communication device 20 by the user. The user information may include personal information included in the first electronic certificate 121.

If the prospective user is authenticated as a result of the personal first authentication process in step S106, then the personal identification medium 10 uses the first private key 122 to digitally sign the user information to be registered in accordance with the demand in step S107 (step S108). The digital signature may be realized, for example, by using the first private key to perform an encryption process on a hash value obtained from the user information. The personal identification medium 10 transmits, to the communication device 20, the user information (signed user information) that has been digitally signed (step S109). The communication device 20 transmits the user information received from the personal identification medium 10 to the service management device 50 (step S110). The service management device 50 executes a second authentication process on the received user information (step Sill). In the second authentication process, the service management device 50 determines whether or not there has been tampering of the user information.

If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 transmits, to the personal authentication device 30, an expiration determination demand regarding the first electronic certificate included in the user information that has been received (step S112). Upon receiving the expiration determination demand, the personal authentication device 30 performs an expiration determination regarding the first electronic certificate that is being processed (step S113). The personal authentication device 30 transmits an expiration determination response including the determination result of the expiration determination to the service management device 50 (step S114).

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 registers, as use member information in the storage unit 52, information such as the name and the address included in the user information received in step S110, the personal information and first identification information included in the first electronic certificate (step S115). The service management device 50 notifies the communication device 20 that the registration of the use member information has been completed (step S116). Upon receiving registration completion notification of the use member information, the communication device 20 outputs information indicating that the registration has been completed via the output unit 24. For example, the communication device 20 displays a screen indicating that registration has been completed on the output unit 24 (step S117).

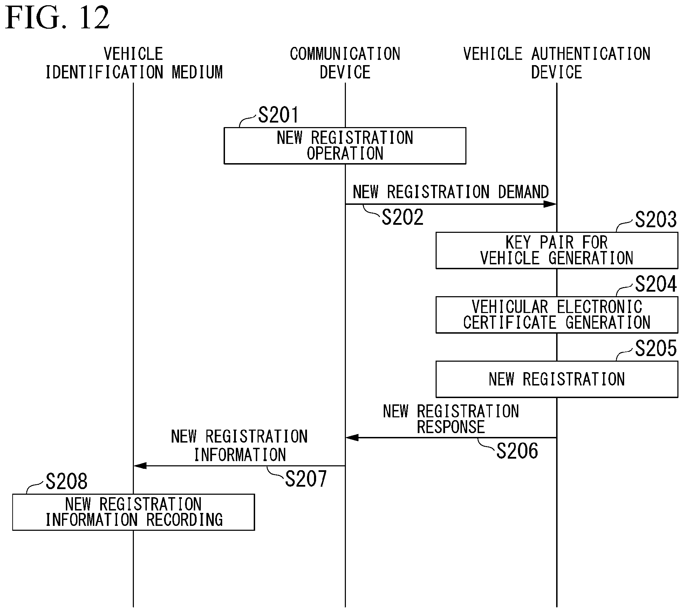

Next, FIG. 12 will be used to explain the processing flow for a prospective provider who wishes to provide a vehicle 60 to acquire a vehicular electronic certificate that will be necessary when registering with the service management device 50. The prospective provider is a person who wishes to lend a vehicle 60 owned by that person to another person in car sharing. First, the prospective provider performs operations on the input unit 23 of the communication device 20 to register with the vehicle authentication device 40 (step S201). The communication device 20 transmits a new registration demand to the vehicle authentication device 40 in accordance with the operations by the prospective provider (step S202). The new registration demand includes vehicle identification information recorded in the vehicle identification medium 70. Upon receiving the new registration demand, the vehicle authentication device 40 generates a key pair for vehicle (a vehicle private key and a vehicle public key) corresponding to the vehicle identification information included in the new registration demand that has been received (step S203). The vehicle authentication device 40 uses the vehicle private key and the vehicle public key that have been generated to generate a vehicular electronic certificate (step S204). The vehicular electronic certificate includes, for example, information such as vehicle identification information and the vehicle public key. The vehicle authentication device 40 newly registers the generated vehicular electronic certificate in the storage unit 42 (step S205).

The vehicle authentication device 40 generates a new registration response indicating that the new registration has been completed. The new registration response includes the vehicular electronic certificate and the vehicle private key that have been generated. The vehicle authentication device 40 transmits the new registration response to the operator of the communication device 20 (the owner of the vehicle identification medium 70) by a means for which security can be ensured (step S206). The transmission of the new registration response may be realized by any method as long as the security can be ensured. Upon receiving the new registration response, the communication device 20 transmits, to the vehicle identification medium 70, the vehicular electronic certificate and the vehicle private key included in the new registration response that has been received (step S207). The control unit 73 of the vehicle identification medium 70 records the new registration information that has been received in the storage unit 72 (step S208).

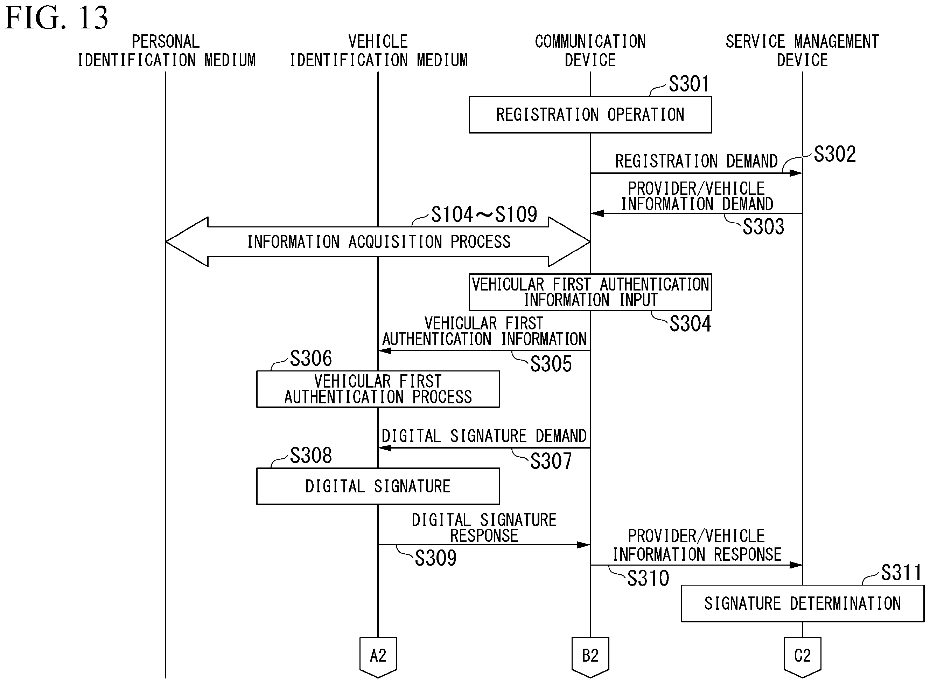

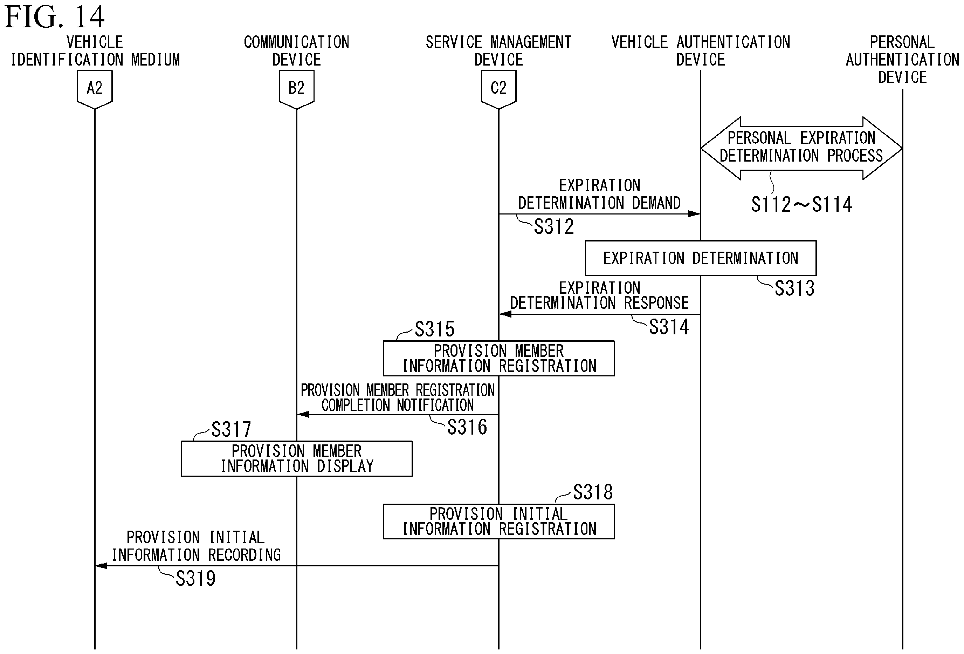

Next, FIG. 13 and FIG. 14 will be used to explain the processing flow when a prospective provider who wishes to provide a vehicle 60 registers with the service management device 50. First, a prospective provider performs operations on the input unit 23 of the communication device 20 to register with the service management device 50 (step S301). The communication device 20 transmits a registration demand to the service management device 50 in accordance with the operations by the prospective provider (step S302). Upon receiving the registration demand, the service management device 50 transmits, to the communication device 20, a provider/vehicle information demand in accordance with the registration demand that has been received (step S303). The provider/vehicle information demand is a demand for identification information indicating the prospective provider and identification information indicating the vehicle that is to be provided.

Upon receiving the provider/vehicle information demand, the communication device 20 uses the personal identification medium 10 of the prospective provider to acquire signed provider information by executing an information acquisition process. The signed provider information is provider information that has been digitally signed by using a first private key. The process for acquiring the signed provider information is similar to the process for acquiring signed user information in steps S104 to S109 in FIG. 10. For this reason, a detailed description will be omitted. It should be noted that the provider information is information regarding the prospective provider. The provider information may include information on the user (e.g., name, age, address, gender, etc.) input to the communication device 20 by the user. The provider information may include personal information included in the first electronic certificate 121.

Additionally, the communication device 20 makes the output unit 24 output a display prompting the input of vehicular first authentication information. The prospective provider inputs vehicular first authentication information by operating the input unit 23 (step S304). The vehicular first authentication information may, for example, be a preset PIN code. The communication device 20 transmits, to the vehicle identification medium 70, the vehicular first authentication information input via the input unit 23 (step S305). The vehicle identification medium 70 executes a vehicular first authentication process on the basis of the vehicular first authentication information that has been received (step S306). The communication device 20 demands a digital signature from the vehicle identification medium 70 (step S307). At this time, the communication device 20 generates, for example, a random number or an electronic document (or a hash value thereof) used for a digital signature, and transmits the same to the vehicle identification medium 70.

If the prospective provider is authenticated as a result of the authentication process in step S306, then the vehicle identification medium 70, in response to the demand in step S307, uses the vehicle private key 725 to digitally sign the data (a random number, an electronic document, a hash value, etc.) transmitted from the communication device 20 (step S308). The vehicle identification medium 70 transmits, to the communication device 20, a digital signature response including the digitally signed data and a vehicular electronic certificate (step S309). The communication device 20 transmits, to the service management device 50, the digital signature response received from the vehicle identification medium 70 and provider information for the prospective provider acquired in the information acquisition process (step S310). The service management device 50 determines whether or not there has been tampering of the first electronic certificate in the provider information and the vehicular electronic certificate that have been received (step S311).

If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate and the vehicular electronic certificate that have been received. Regarding the first electronic certificate, a personal expiration determination process is executed in connection with the personal authentication device 30. The personal expiration determination process is similar to the process described in steps S112 to S114 and thus a description thereof will be omitted. Regarding the vehicular electronic certificate, an expiration determination demand is transmitted to the vehicle authentication device 40 (step S312). Upon receiving the expiration determination demand, the vehicle authentication device 40 performs an expiration determination regarding the vehicular electronic certificate that is being processed (step S313). The vehicle authentication device 40 transmits, to the service management device 50, an expiration determination response including the determination result of the expiration determination (step S314).

If either of the expiration determination results indicate expiration, then the service management device 50 does not proceed any further with the process, and ends the process. In this case, the service management device 50 may notify the communication device 20 of an error. Conversely, if neither of the expiration determination results indicate expiration, then the service management device 50 registers, as provision member information in the storage unit 52, the provider information received in step S310 and vehicle identification information included in the vehicular electronic certificate (step S315). The service management device 50 notifies the communication device 20 that the registration of the provision member information has been completed (step S316). Upon receiving registration completion notification of the provision member information, the communication device 20 outputs information indicating that registration has been completed via the output unit 24. For example, the communication device 20 displays a screen indicating that registration has been completed on the output unit 24 (step S317). Additionally, the service management device 50 registers provision initial information in the storage unit 52 (step S318). The provision initial information includes key information 524. For example, at the time of this step S318, the service management device 50 may generate key information 524 for the prospective provider, and may store the key information 524 in association with the first electronic certificate 121 of the prospective provider and/or the vehicular electronic certificate. The service management device 50 records the provision initial information in the vehicle identification medium 70 (step S319). At this time, the vehicle identification medium 70 may, for example, have a service AP 727, a service private key 728, and a public key of the service management device 50 recorded therein. In particular, the service private key 728 should preferably be recorded in the vehicle identification medium 70 by using a secure means.

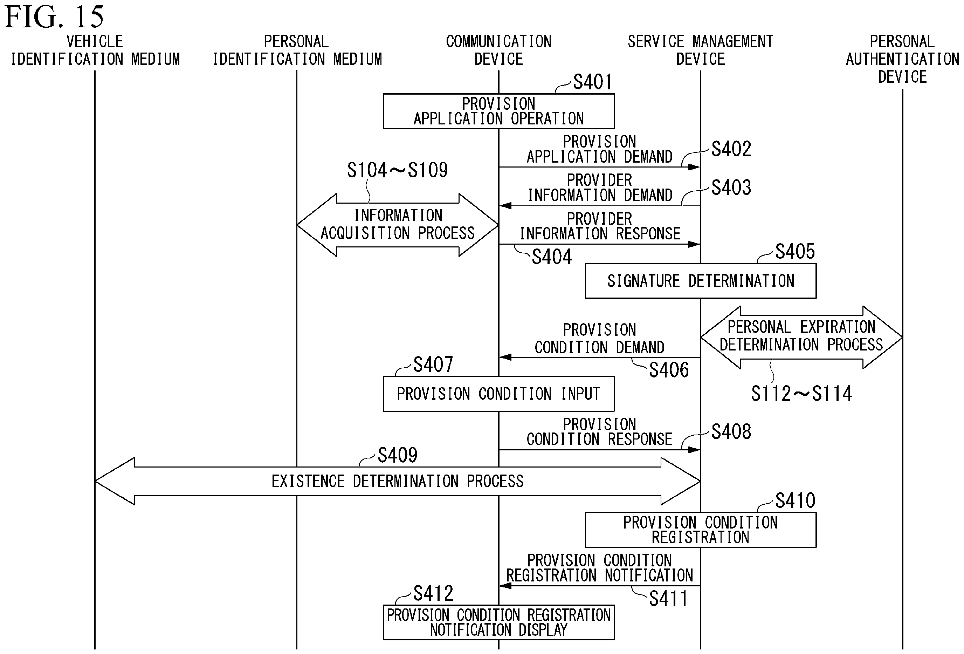

Next, FIG. 15 will be used to explain the processing flow when a prospective provider who wishes to provide a vehicle 60 applies for provision to the service management device 50. First, the prospective provider performs operations on the input unit 23 of the communication device 20 to apply for provision to the service management device 50 (step S401). The communication device 20 transmits a provision application demand to the service management device 50 in accordance with the operations by the prospective provider (step S402). Upon receiving the provision application demand, the service management device 50 transmits a provider information demand to the communication device 20 in accordance with the provision application demand that has been received (step S403). The provider information demand is a demand for identification information indicating the provider who will provide the vehicle 60 that is to be provided.

Next, an information acquisition process (steps S104 to S109) between the communication device 20 and the personal identification medium 10 is executed. By executing the information acquisition process, provider information is acquired from the personal identification medium 10 of the provider. The communication device 20 transmits the provider information to the service management device 50 (step S404). The service management device 50 determines whether or not there has been tampering of the first certificate in the provider information that has been received (step S405). If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate that has been received. Regarding the first electronic certificate, a personal expiration determination process is executed in connection with the personal authentication device 30. The personal expiration determination process is similar to the process described in steps S112 to S114, and thus a description thereof will be omitted.

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 transmits a provision condition demand to the communication device 20 (step S406). The provision condition demand is a demand for information indicating a condition relating to the provision of the vehicle that is to be provided.

Upon receiving the provision condition demand, the communication device 20 provides an output for prompting the prospective provider to input a condition relating to the provision of the vehicle that is to be provided. For example, the communication device 20 displays a screen for inputting the condition on the output unit 24. The prospective provider inputs the condition for provision to the communication device 20 by operating the input unit 23 (step S407). The communication device 20 transmits, to the service management device 50, a provision condition response indicating the condition for provision that has been input (step S408).

Upon receiving the provision condition response, the service management device 50 executes an existence determination process for a vehicle identification medium 70 associated with a vehicle 60 that has been registered to be provided (step S409). The existence determination process is a process for confirming that the vehicle identification medium 70 associated with the vehicle 60 that is to be provided is in a usable state, for example, by transmitting a specific signal to the vehicle identification medium 70. If the vehicle 60 to be provided is confirmed to be in the usable state by the existence determination process, then the service management device 50 registers information indicating the received provision condition, as provision application information 521, in the storage unit 52 (step S410). Conversely, if the vehicle 60 to be provided is not confirmed to be in the usable state by the existence determination process, then the service management device 50 does not proceed any further with the process, and ends the process. In this case, the service management device 50 may notify the communication device 20 of an error. When the registration is completed, the service management device 50 notifies the communication device 20 that the registration of the provision condition has been completed (step S411). Upon receiving registration notification of the provision condition, the communication device 20 outputs information indicating that the registration has been completed via the output unit 24. For example, the communication device 20 displays a screen indicating that the registration has been completed on the output unit 24 (step S412).

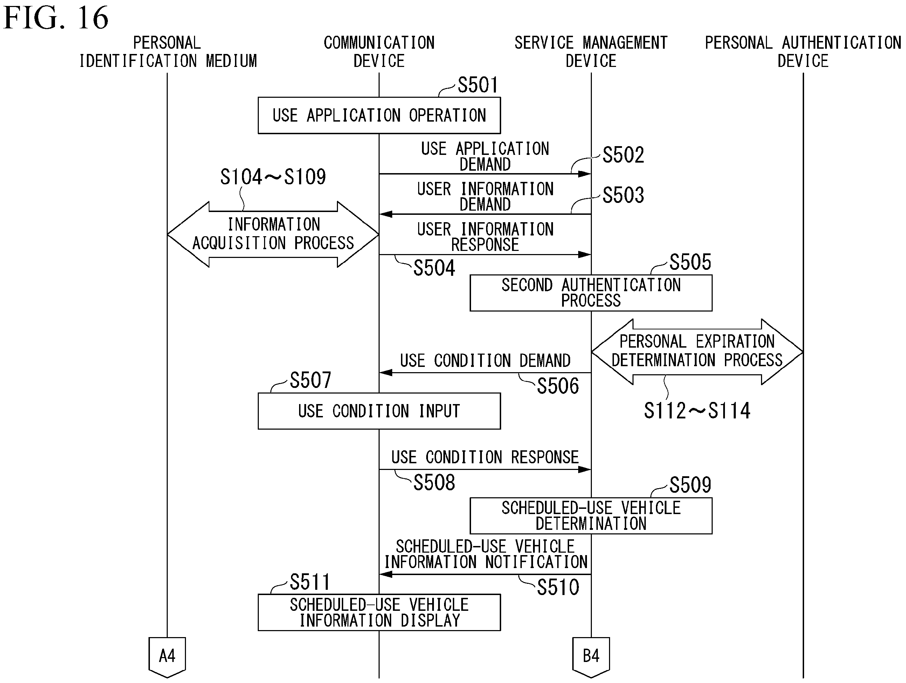

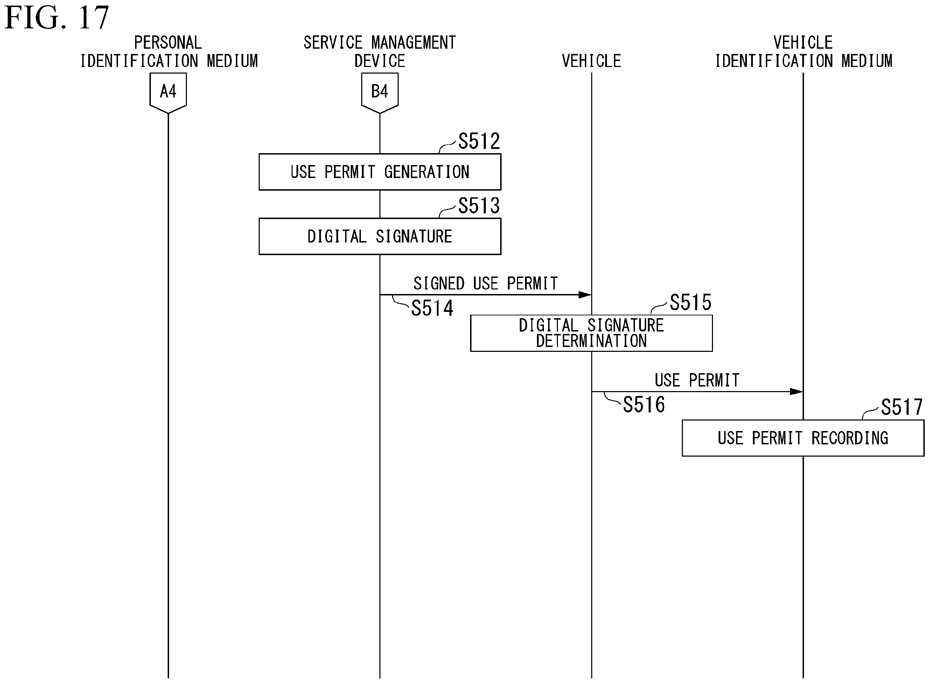

Next, FIG. 16 and FIG. 17 will be used to explain the processing flow when a prospective user who wishes to use a vehicle 60 applies for use to the service management device 50. It should be noted that in FIG. 16 and FIG. 17, the vehicle identification medium 70 is communicably connected with the first communication unit 61 of the vehicle 60. For example, if the first communication unit 61 is configured by using an on-board device, then the vehicle identification medium 70 may be in a state of remaining inserted in a physical interface, such as an insertion port, provided in the on-board device. First, a prospective user performs operations on the input unit 23 of the communication device 20 to apply for use to the service management device 50 (step S501). The communication device 20 transmits, to the service management device 50, a use application demand in accordance with the operations by the prospective user (step S502). Upon receiving the use application demand, the service management device 50 transmits, to the communication device 20, a user information demand in accordance with the use application demand that has been received (step S503). The user information demand is a demand for identification information indicating the prospective user.

Upon receiving the user information demand, the communication device 20 uses the personal identification medium 10 of the prospective user to acquire signed user information by executing an information acquisition process. The process for acquiring the signed user information is similar to steps S104 to S109 in FIG. 10. For this reason, a detailed description will be omitted. The communication device 20 transmits the signed user information to the service management device 50 (step S504). The service management device 50 determines whether or not there has been tampering of the signed user information that has been received (step S505). If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate included in the signed use permit that has been received. Regarding the first electronic certificate, a personal expiration determination process is executed in connection with the personal authentication device 30. The personal expiration determination process is similar to the process described in steps S112 to S114 and thus a description thereof will be omitted.

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 transmits a use condition demand to the communication device 20 (step S506). The use condition demand is a demand for information indicating a condition relating to the use of the vehicle. The condition relating to use includes, for example, information (such as vehicle type) regarding the vehicle 60, information regarding the location of use, and information indicating the time period of use (e.g., information indicating a use starting date/time and a use ending date/time). The condition relating to use may further include other conditions.

Upon receiving the use condition demand, the communication device 20 provides an output for prompting the prospective user to input a condition relating to the use of the vehicle. For example, the communication device 20 displays a screen for inputting the condition on the output unit 24. The prospective user inputs the condition for use to the communication device 20 by operating the input unit 23 (step S507). The communication device 20 transmits, to the service management device 50, a use condition response indicating the condition for use that has been input (step S508).

Upon receiving the use condition response, the service management device 50 searches the provision application information 521 registered in the storage unit 52 for provision application information 521 satisfying the use condition that has been received. Then, the service management device 50 selects one item of provision application information 521 from among the provision application information 521 satisfying the use condition, and determines the vehicle corresponding to the selected provision application information 521 as a scheduled-use vehicle (step S509). The service management device 50 generates use application information 522 on the basis of the selected provision application information 521 and information regarding the prospective user, and registers the same in the storage unit 52. Then, the service management device 50 notifies the communication device 20 of information indicating the scheduled-use vehicle that has been determined (step S510). Upon receiving the information notification of the scheduled-use vehicle, the communication device 20 outputs information indicating the scheduled-use vehicle via the output unit 24. For example, the communication device 20 displays a screen indicating some or all of the use application information 522 on the output unit 24 (step S511).

The service management device 50 generates a use permit on the basis of the use application information 522 (step S512). The service management device 50 digitally signs the use permit that has been generated (step S513). The service management device 50 transmits the signed use permit to the vehicle 60 that is a target for the use permit (step S514). Thereafter, a public key of the service management device 50 and the digital signature are used to determine whether or not there has been tampering of the signed use permit that has been received (step S515). This determination process may be performed in the vehicle 60 or may be performed in the vehicle identification medium 70. If tampering has occurred, then the vehicle 60 suspends the process. Conversely, if tampering has not occurred, then the vehicle 60 performs an action for writing the use permit into the vehicle identification medium 70 that is connected thereto (step S516). The control unit 73 of the vehicle identification medium 70 records the use permit in the storage unit 72 in accordance with control by the vehicle 60 (step S517).

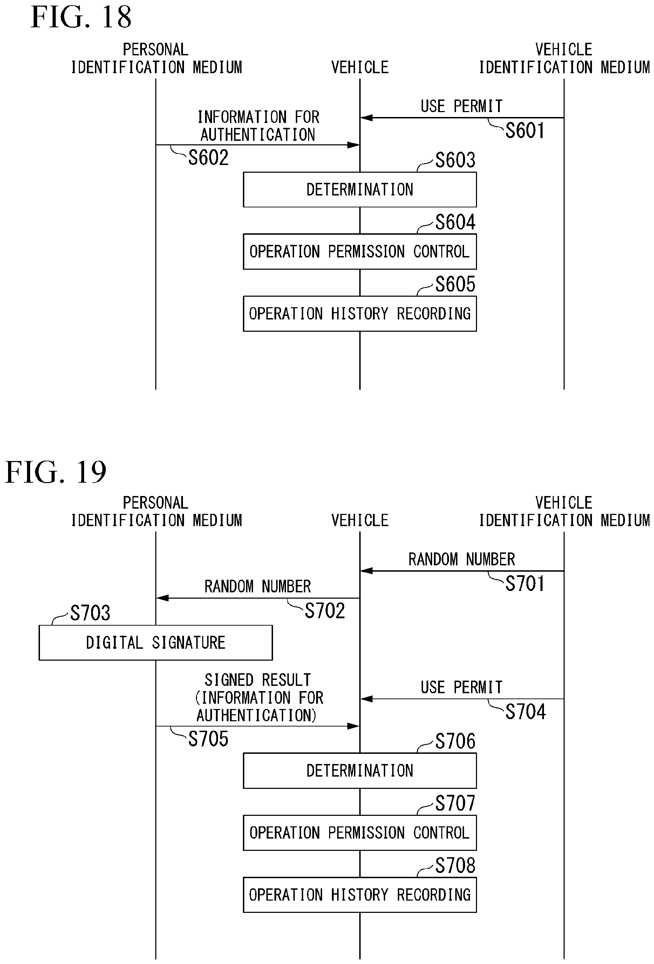

Next, FIG. 18 will be used to explain the processing flow when a prospective user whose use application information 522 is already registered uses the vehicle 60. First, the prospective user communicably connects, to the vehicle 60 that the prospective user wishes to use, the personal identification medium 10 that was used when applying for use. Upon detecting that the personal identification medium 10 has been connected thereto, the vehicle 60 reads, from the vehicle identification medium 70 connected to the vehicle 60, the recorded use permit itself or information included in the use permit (step S601). Additionally, the vehicle 60 reads information used for authentication (information for authentication) from the personal identification medium 10 of the user (step S602).

If a prescribed condition indicating that the user is a legitimate user (the user to whom the use permit was issued) is satisfied, then the vehicle 60 determines that the use of the vehicle 60 will be permitted (step S603). Conversely, if the prescribed condition mentioned above is not satisfied, then the vehicle 60 determines that the use thereof will not be permitted. The main control unit 651 of the vehicle 60 performs an action enabling the vehicle 60 to be used in accordance with the determination result (step S604). When operation is permitted, the vehicle 60 records a history of the operation of the vehicle 60 by the prospective user until the use by the prospective user ends (step S605). When the use by the prospective user ends, the vehicle 60 transmits, to the service management device 50, the history of operation recorded to that point. Upon receiving the history of the operation, the service management device 50 records information of the received history in the storage unit 52 as achievement information 523.

Next, FIG. 19 will be used to explain a specific example of the processing flow when a prospective user whose use application information 522 is already registered uses the vehicle 60. In the specific example in FIG. 19, challenge-and-response is employed. First, the prospective user communicably connects, to the vehicle 60 that the prospective user wishes to use, the personal identification medium 10 that was used when applying for use. Upon detecting that the personal identification medium 10 has been connected thereto, the vehicle 60 acquires, from the vehicle identification medium 70 connected to the vehicle 60, a random number generated by the vehicle identification medium 70 (step S701). The vehicle 60 transmits the acquired random number to the personal identification medium 10 and demands a digital signature (step S702). Upon receiving the random number from the vehicle 60, the personal identification medium 10 uses a private key recorded therein to digitally sign the random number (step S703). The private key used at this time may be the first private key or may be the second private key. However, the private key that is to be used is prearranged with the other device.

The vehicle 60 acquires the use permit from the vehicle identification medium 70 (step S704). The personal identification medium 10 transmits the signed random number, as a signed result, to the vehicle 60 (step S705). The signed result that is transmitted at this time corresponds to the information for authentication in step S008 in FIG. 9. The vehicle 60 uses a public key included in the electronic certificate in the use permit and the signed result to determine whether or not the user of the vehicle 60 is a legitimate user (step S706). The public key used at this time is a public key corresponding to the private key that was used in the process in step S703.

If a prescribed condition indicating that the user is a legitimate user (the user to whom the use permit was issued) is satisfied, then the vehicle 60 determines that the use of the vehicle 60 will be permitted. Conversely, if the prescribed condition mentioned above is not satisfied, then the vehicle 60 determines that the use thereof will not be permitted. The main control unit 651 of the vehicle 60 performs an action enabling the vehicle to be used in accordance with the determination result (step S707). When operation is permitted, the vehicle 60 records a history of the operation of the vehicle 60 by the prospective user until the use by the prospective user ends (step S708).

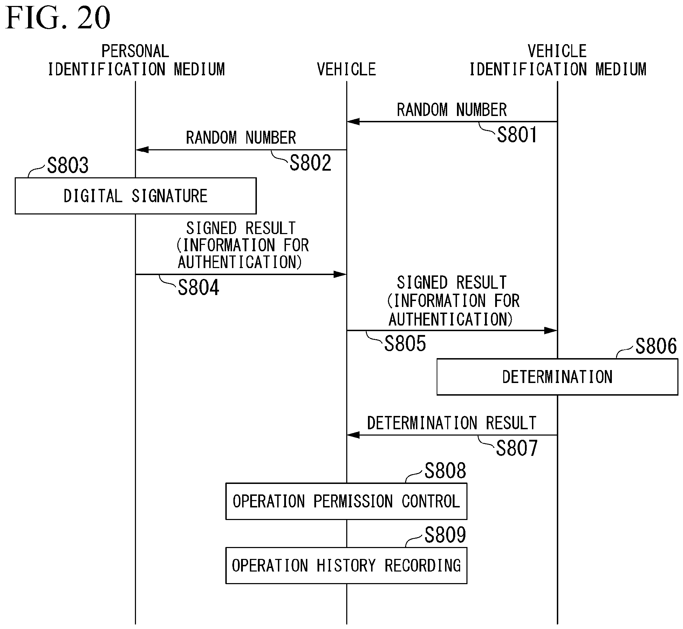

Next, FIG. 20 will be used to explain another specific example of the processing flow when a prospective user whose use application information 522 is already registered uses the vehicle 60. In the specific example in FIG. 20 also, challenge-response is employed. First, the prospective user communicably connects, to the vehicle 60 that the prospective user wishes to use, the personal identification medium 10 that was used when applying for use. Upon detecting that the personal identification medium 10 has been connected thereto, the vehicle 60 acquires, from the vehicle identification medium 70 connected to the vehicle 60, a random number generated by the vehicle identification medium 70 (step S801). The vehicle 60 transmits the acquired random number to the personal identification medium 10 and demands a digital signature (step S802). Upon receiving the random number from the vehicle 60, the personal identification medium 10 uses a private key recorded therein to digitally sign the random number (step S803). The private key used at this time may be the first private key or may be the second private key. However, the private key that is to be used is prearranged with the other device.

The personal identification medium 10 transmits the signed random number, as a signed result, to the vehicle 60 (step S805). The signed result that is transmitted at this time corresponds to the information for authentication in step S008 in FIG. 9. Upon receiving the signed result from the personal identification medium 10, the vehicle 60 transmits the signed result that has been received to the vehicle identification medium 70 (step S805). The vehicle identification medium 70 uses a public key included in the electronic certificate in the use permit and the signed result to determine whether or not the user of the vehicle 60 is a legitimate user (step S806). The public key used at this time is a public key corresponding to the private key that was used in the process in step S803.

The vehicle identification medium 70 transmits the determination result to the vehicle 60 (step S807). If the determination result indicating that the user is a legitimate user (the user to whom the use permit was issued) is obtained, then the vehicle 60 determines that the use of the vehicle 60 will be permitted. Conversely, if the determination result indicating that the above-mentioned prescribed condition is not satisfied is obtained, then the vehicle 60 determines that the use thereof will not be permitted. The main control unit 651 of the vehicle 60 performs an action enabling the vehicle 60 to be used in accordance with the determination result (step S808). When operation is permitted, the vehicle 60 records a history of the operation of the vehicle 60 by the prospective user until the use by the prospective user ends (step S809).

It should be noted that FIG. 19 and FIG. 20 are merely specific examples of the process in FIG. 18. Other processes may be applied as specific examples of FIG. 18. For example, in step S602 in FIG. 18, the first identification information or the second identification information (hereinafter referred to simply as "identification information") may be transmitted, as the information for authentication, from the personal identification medium 10 to the vehicle 60. In this case, the vehicle 60 may, during the determination process (step S603), determine to permit use if the identification information included in the use permit acquired from the vehicle identification medium 70 and the identification information acquired from the personal identification medium 10 indicate the same person (e.g., if they match).

In the control system 100 configured in this manner, a use permit including the information recorded in the personal identification medium 10 is generated in the service management device 50. The use permit generated in the service management device 50 is recorded in the vehicle identification medium 70 connected to the vehicle 60 to be provided. Furthermore, when the user uses the vehicle 60, the information recorded in the personal identification medium 10 of the user is used to determine whether or not the user is the legitimate user permitted to use the vehicle 60 in the use permit. For this reason, it becomes possible to conveniently provide the vehicle 60 to the legitimate user while preventing the vehicle 60 from being provided to an illegitimate user.

Additionally, the personal identification medium 10 stores information issued by the personal authentication agency 300, which is an organization having a certain degree of strictness. Information issued by such a personal authentication agency 300 is used to determine whether or not the user is a legitimate user of the vehicle 60. For this reason, it becomes possible to more strictly prevent situations in which the vehicle 60 is provided to an illegitimate user. Additionally, due to such a mechanism, it is possible to ensure the identity of the "legitimate user", and to prevent the vehicle 60 from being provided to a person of uncertain identity who has simply registered as a user in the service management device 50. For example, in Japan, such strict prevention may be realized by using an electronic signature certificate and/or an electronic certificate for user identification in an individual number card.

Additionally, when determining whether or not the user is legitimate in the vehicle 60, specific information (e.g., a random number) may be provided from the vehicle 60 to the personal identification medium 10, and information obtained by encrypting that random number with a personal private key may be used to make the determination in the vehicle 60. In this case, the vehicle 60 may use the personal public key included in the use permit recorded in the vehicle identification medium 70 to decrypt the encrypted random number, and may determine that the user is legitimate if the value obtained by decryption and the random value provided to the personal identification medium 10 match. Due to such a configuration, it becomes possible to more reliably prevent illegitimate users from being provided with the vehicle 60.

Additionally, the vehicle identification medium 70 stores information issued by the vehicle authentication agency 400, which is an organization having a certain degree of strictness. Information issued by such a vehicle authentication agency 400 is used for registering the prospective provider with the service management device 50. Furthermore, a vehicle 60 provided by the prospective provider registered in this manner is provided to the user. For this reason, it becomes possible to prevent a vehicle 60 involved in some sort of illegitimate circumstances from being provided to the user.

Additionally, when the prospective provider registers with the service management device 50, a personal identification medium 10 of the prospective provider is necessary. As mentioned above, the personal identification medium 10 stores information issued by the personal authentication agency 300, which is an organization having a certain degree of strictness. For this reason, it becomes possible to ensure the identity of the "provider of the vehicle 60", and to prevent the vehicle 60 from being provided by a person of uncertain identity who has simply registered as a user in the service management device 50. From this standpoint also, in Japan, for example, such advantageous effects may be realized by using an electronic signature certificate and/or an electronic certificate for user identification in an individual number card.

Additionally, in step S409, the existence determination process is executed, thereby ensuring that the vehicle 60 registered to be provided is in a usable state. For this reason, it is possible to prevent the occurrence of situations in which thereafter, a user who has been determined to use the vehicle 60 on the basis of the provision condition cannot use the vehicle 60.

### (Modification examples)

The service management device 50 may determine whether or not vehicle state information recorded in the vehicle identification medium 70 satisfies a prescribed condition in the existence determination process (step S409) illustrated in FIG. 15. The vehicle state information is information regarding the status of the vehicle 60 to be provided. For example, the vehicle state information may be information indicating the registration status of the vehicle 60 under an automobile inspection registration system, or may be information regarding maintenance received by the vehicle 60. The vehicle state information may be individually recorded in the storage unit 72, may be included in the vehicle attribute information 722, or may be included in the vehicular electronic certificate 724. The prescribed condition of the vehicle state information is a condition indicating that, when the vehicle 60 is used, there will be no malfunctions, legal problems, and safety-related problems. The prescribed condition of the vehicle state information may be, for example, that registration under the automobile inspection registration system has not expired, that specific maintenance has been received, or that automobile insurance has not expired (is valid). In this case, during the existence determination process, the service management device 50 determines whether the vehicle state information satisfies a prescribed condition as one of the conditions for confirming that the vehicle 60 to be provided is in a usable state.

The service management device 50 may determine, as a condition for executing the use member information registration in step S115 and as a condition for generating the use permit in step S512, that the personal information of the prospective user satisfies the prescribed condition. A specific example in which the personal information satisfies the prescribed condition is that the prospective user does not have any safety-related problems and legal problems regarding the use of the vehicle 60. More specifically, the prescribed condition of the personal information may be that the prospective user is younger than a prescribed age (e.g., younger than 75 years old, younger than 80 years old, or the like), has a valid driver's license, or the like. By performing the determination on the basis of such a condition, it is possible to proactively prevent use of the vehicle 60 by a person for whom driving involves legal problems and/or safety-related problems.

The service management device 50 may acquire information regarding specific drivers and may search for and output users matching that information. The specific drivers are, for example, drivers who have committed traffic violations. The information regarding specific drivers is information that has come to light regarding vehicles in which traffic violations were committed. For example, it may be information regarding the license plate number of a vehicle, information regarding the characteristics of a vehicle body, or information regarding the date/time and location at which a traffic violation occurred. The service management device 50 may reference the achievement information 523 and/or the provision application information 521 to search for and output users matching information regarding specific drivers as mentioned above. Due to such a configuration, it is possible to recognize who drove when and in which intervals, thus allowing drivers who have committed violations to be identified.

### [Substitute driving service]

Next, a specific example of the flow of actions when the control system 100 is applied to a substitute driving service will be explained. In the substitute driving service, the person providing the vehicle 60 is a requester (substitute requester) requesting to receive a substitute driving service. In the substitute driving service, the person using the vehicle 60 is a person who will substitute-drive the vehicle 60 in order to provide the substitute driving service. Thus, in the substitute driving service, providing the vehicle 60 corresponds to requesting the substitute driving service and using the vehicle 60 corresponds to providing the substitute driving service.

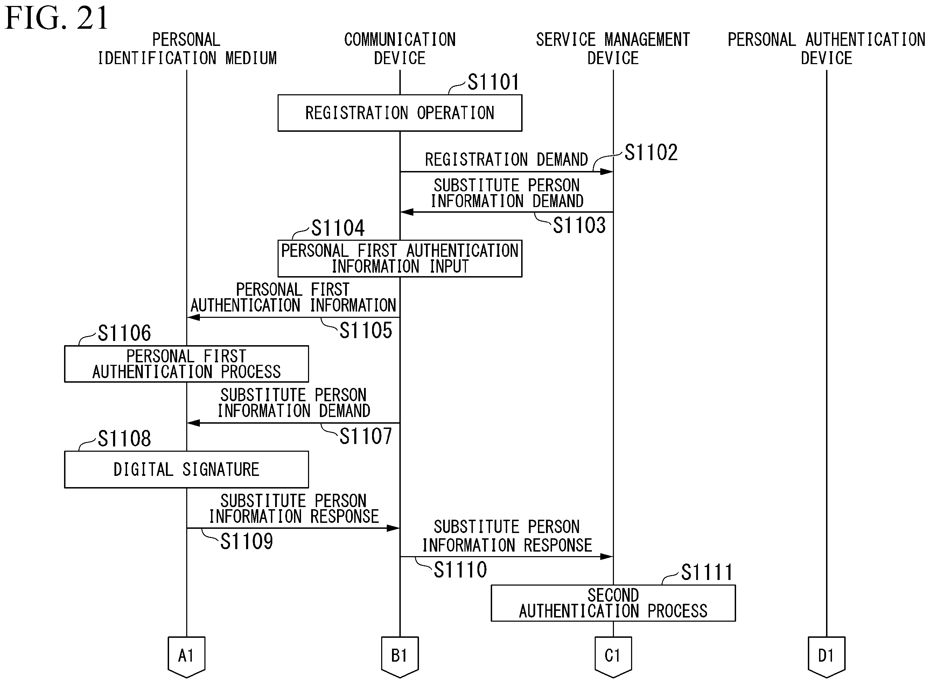

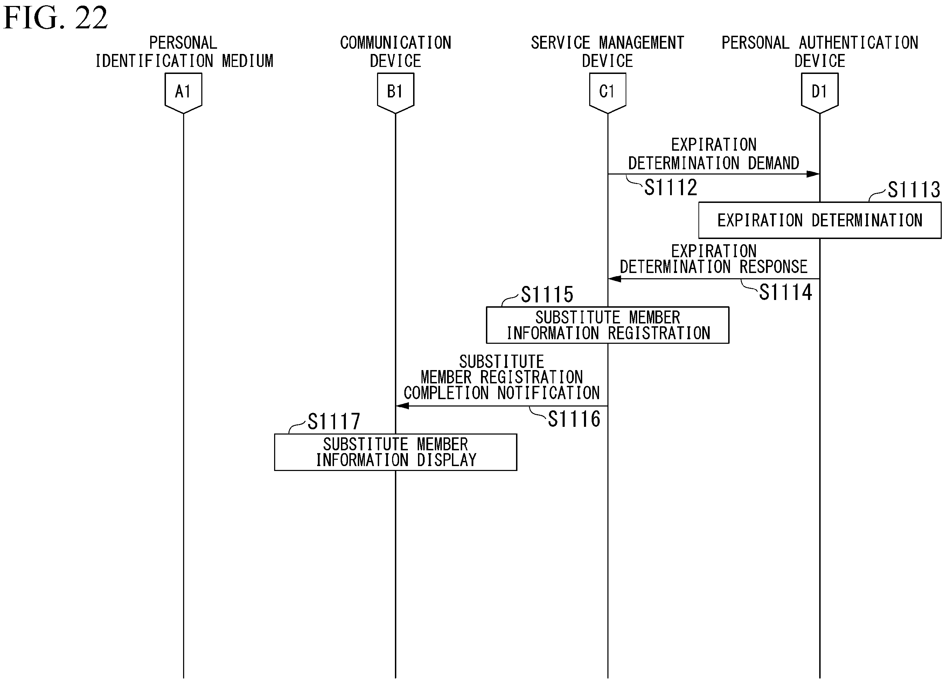

FIG. 21 to FIG. 29 are sequence charts illustrating a specific example of the flow of actions when the control system 100 is applied to a substitute driving service. First, FIG. 21 and FIG. 22 will be used to explain the processing flow when a substitute provider who wishes to provide a substitute driving service registers with the service management device 50. The substitute provider is a person who wishes to substitute-drive a vehicle 60 owned by another person in a substitute driving service. Additionally, the service management device 50 may be operated by a mediating business or the like for connecting substitute providers with substitute requesters to be described below in a substitute driving service. First, a substitute provider performs operations on the input unit 23 of the communication device 20 to register with the service management device 50 (step S1101). The communication device 20 transmits a registration demand to the service management device 50 in accordance with the operations by the substitute provider (step S1102). Upon receiving the registration demand, the service management device 50 transmits a substitute person information demand to the communication device 20 in accordance with the registration demand that has been received (step S1103). In the substitute driving service, the substitute person information demand is a demand for identification information (substitute person information) indicating the substitute provider. The substitute person information may, for example, be a first electronic certificate 121.

Upon receiving the substitute person information demand, the communication device 20 makes the output unit 24 output a display prompting the input of personal first authentication information. The substitute provider inputs the personal first authentication information by operating the input unit 23 (step S1104). The personal first authentication information may, for example, be a preset PIN code. The communication device 20 transmits the personal first authentication information that has been input by means of the input unit 23 to the personal identification medium 10 (step S1105). The personal identification medium 10 executes an authentication process on the basis of the personal first authentication information that has been received (step S1106). The communication device 20 demands, from the personal identification medium 10, a digital signature regarding the substitute person information to be registered (step S1107). The substitute person information to be registered is information regarding the substitute provider. The substitute person information may include information on the user (e.g., name, age, address, gender, etc.) input to the communication device 20 by the user. The substitute person information may include personal information included in the first electronic certificate 121.

If the substitute provider is authenticated as a result of the personal first authentication process in step S1106, then the personal identification medium 10 uses the first private key 122 to digitally sign the substitute person information to be registered (step S1108) in accordance with the demand in step S1107. The digital signature may be realized, for example, by using the first private key to perform an encryption process on a hash value obtained from the substitute person information. The personal identification medium 10 transmits, to the communication device 20, the substitute person information (signed substitute person information) that has been digitally signed (step SI109). The communication device 20 transmits the substitute person information received from the personal identification medium 10 to the service management device 50 (step S1110). The service management device 50 executes a second authentication process on the substitute person information that has been received (step S1111). In the second authentication process, the service management device 50 determines whether or not there has been tampering of the substitute person information.

If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 transmits, to the personal authentication device 30, an expiration determination demand regarding the first electronic certificate included in the substitute person information that has been received (step S1112). Upon receiving the expiration determination demand, the personal authentication device 30 performs an expiration determination regarding the first electronic certificate that is being processed (step S1113). The personal authentication device 30 transmits an expiration determination response including the determination result of the expiration determination to the service management device 50 (step S1114).

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 registers, as substitute member information in the storage unit 52, information such as the name and the address included in the substitute person information received in step S1110, and the personal information and first identification information included in the first electronic certificate (step S1115). The service management device 50 notifies the communication device 20 that the registration of the substitute member information has been completed (step S1116). Upon receiving the registration completion notification of the substitute member information, the communication device 20 outputs information indicating that the registration has been completed via the output unit 24. For example, the communication device 20 displays a screen indicating that registration has been completed on the output unit 24 (step S1117).

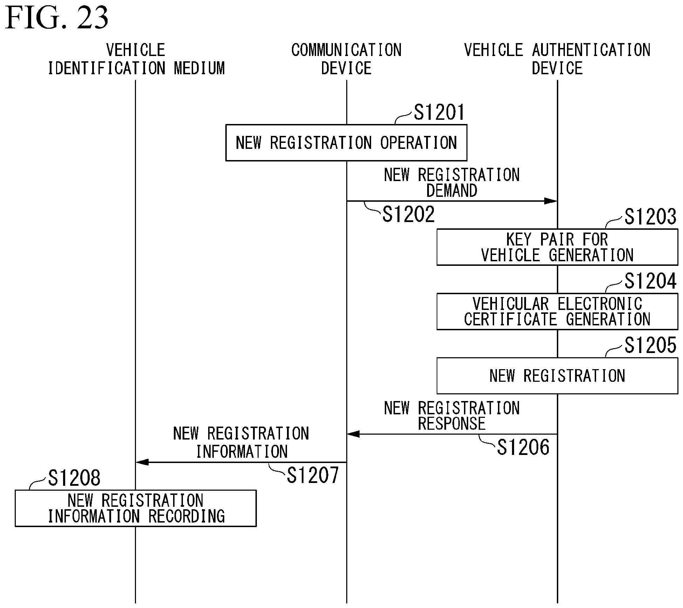

Next, FIG. 23 will be used to explain the processing flow for a substitute requester who wishes to request substitute driving of a vehicle 60 to acquire a vehicular electronic certificate that will be necessary when registering with the service management device 50. The substitute requester is a person who wishes to request substitute driving by another person (substitute provider) who will substitute-drive a vehicle 60 owned by the substitute requester in a substitute driving service. First, the substitute-driving requester performs operations on the input unit 23 of the communication device 20 to register with the vehicle authentication device 40 (step S1201). The communication device 20 transmits a new registration demand to the vehicle authentication device 40 in accordance with the operations by the substitute requester (step S1202). The process from step S1202 is similar to the process described from step S202 in FIG. 12. For this reason, a description thereof will be omitted.

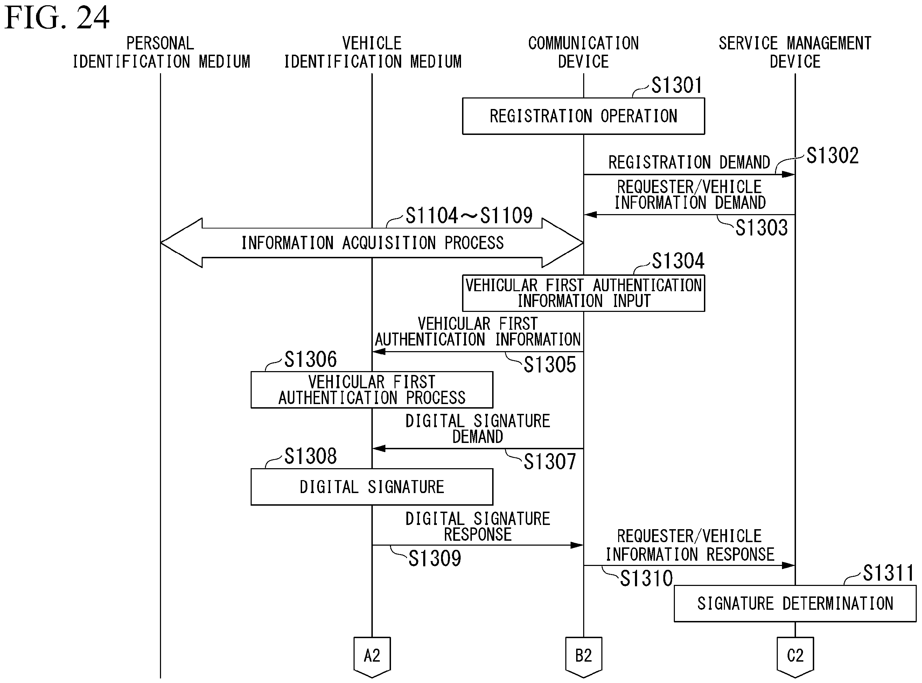

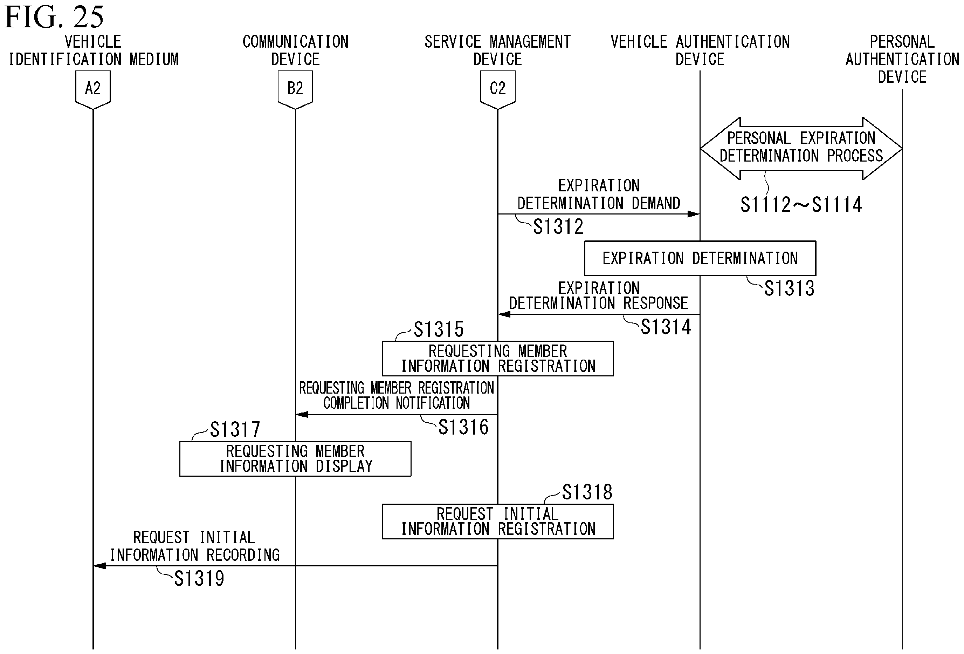

Next, FIG. 24 and FIG. 25 will be used to explain the processing flow when a substitute requester who wishes to request substitute driving of a vehicle 60 registers with the service management device 50. First, a substitute requester performs operations on the input unit 23 of the communication device 20 to register with the service management device 50 (step S1301). The communication device 20 transmits a registration demand to the service management device 50 in accordance with the operations by the substitute requester (step S1302). Upon receiving the registration demand, the service management device 50 transmits, to the communication device 20, a requester/vehicle information demand in accordance with the registration demand that has been received (step S1303). The requester/vehicle information demand is a demand for identification information indicating the substitute requester and identification information indicating the vehicle that is to be substitute-driven.

Upon receiving the requester/vehicle information demand, the communication device 20 uses the personal identification medium 10 of the substitute requester to acquire signed requester information by executing an information acquisition process. The signed requester information is requester information that has been digitally signed by using a first private key. The process for acquiring the signed requester information is similar to the process for acquiring signed substitute person information in steps S1104 to S1109 in FIG. 21. For this reason, a detailed description will be omitted. It should be noted that the requester information is information regarding the substitute requester. The requester information may include information on the user (e.g., name, age, address, gender, etc.) input to the communication device 20 by the user. The requester information may include personal information included in the first electronic certificate 121.

Additionally, the communication device 20 makes the output unit 24 output a display prompting the input of vehicular first authentication information. The substitute requester inputs vehicular first authentication information by operating the input unit 23 (step S1304). The vehicular first authentication information may, for example, be a preset PIN code. The communication device 20 transmits, to the vehicle identification medium 70, the vehicular first authentication information input via the input unit 23 (step S1305). The vehicle identification medium 70 executes a vehicular first authentication process on the basis of the vehicular first authentication information that has been received (step S1306). The communication device 20 demands a digital signature from the vehicle identification medium 70 (step S1307). At this time, the communication device 20 generates, for example, a random number or an electronic document (or a hash value thereof) used for a digital signature, and transmits the same to the vehicle identification medium 70.

If the substitute requester is authenticated as a result of the authentication process in step S1306, then the vehicle identification medium 70, in response to the demand in step S1307, uses the vehicle private key 725 to digitally sign the data (a random number, an electronic document, a hash value, etc.) transmitted from the communication device 20 (step S1308). The vehicle identification medium 70 transmits, to the communication device 20, a digital signature response including the digitally signed data and a vehicular electronic certificate (step S1309). The communication device 20 transmits, to the service management device 50, the digital signature response received from the vehicle identification medium 70 and the requester information of the substitute requester acquired in the information acquisition process (step S1310). The service management device 50 determines whether or not there has been tampering of the first electronic certificate in the requester information and the vehicular electronic certificate that have been received (step S1311).

If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate and the vehicular electronic certificate that have been received. Regarding the first electronic certificate, a personal expiration determination process is executed in connection with the personal authentication device 30. The personal expiration determination process is similar to the process described in steps S1112 to S1114 and thus a description thereof will be omitted. Regarding the vehicular electronic certificate, an expiration determination demand is transmitted to the vehicle authentication device 40 (step S1312). Upon receiving the expiration determination demand, the vehicle authentication device 40 performs an expiration determination regarding the vehicular electronic certificate that is being processed (step S1313). The vehicle authentication device 40 transmits, to the service management device 50, an expiration determination response including the determination result of the expiration determination (step S1314).

If either of the expiration determination results indicate expiration, then the service management device 50 does not proceed any further with the process, and ends the process. In this case, the service management device 50 may notify the communication device 20 of an error. Conversely, if neither of the expiration determination results indicate expiration, then the service management device 50 registers, as requesting member information in the storage unit 52, the requester information received in step S1310 and vehicle identification information included in the vehicular electronic certificate (step S1315). The service management device 50 notifies the communication device 20 that the registration of the requesting member information has been completed (step S1316). Upon receiving registration completion notification of the requesting member information, the communication device 20 outputs information indicating that registration has been completed via the output unit 24. For example, the communication device 20 displays a screen indicating that registration has been completed on the output unit 24 (step S1317). Additionally, the service management device 50 registers request initial information in the storage unit 52 (step S1318). The request initial information includes key information 524. For example, at the time of this step S1318, the service management device 50 may generate key information 524 for the substitute requester, and may store the key information 524 in association with the first electronic certificate 121 of the substitute requester and/or the vehicular electronic certificate. The service management device 50 records the request initial information in the vehicle identification medium 70 (step S1319). At this time, the vehicle identification medium 70 may, for example, have a service AP 727, a service private key 728, and a public key of the service management device 50 recorded therein. In particular, the service private key 728 should preferably be recorded in the vehicle identification medium 70 by using a secure means.

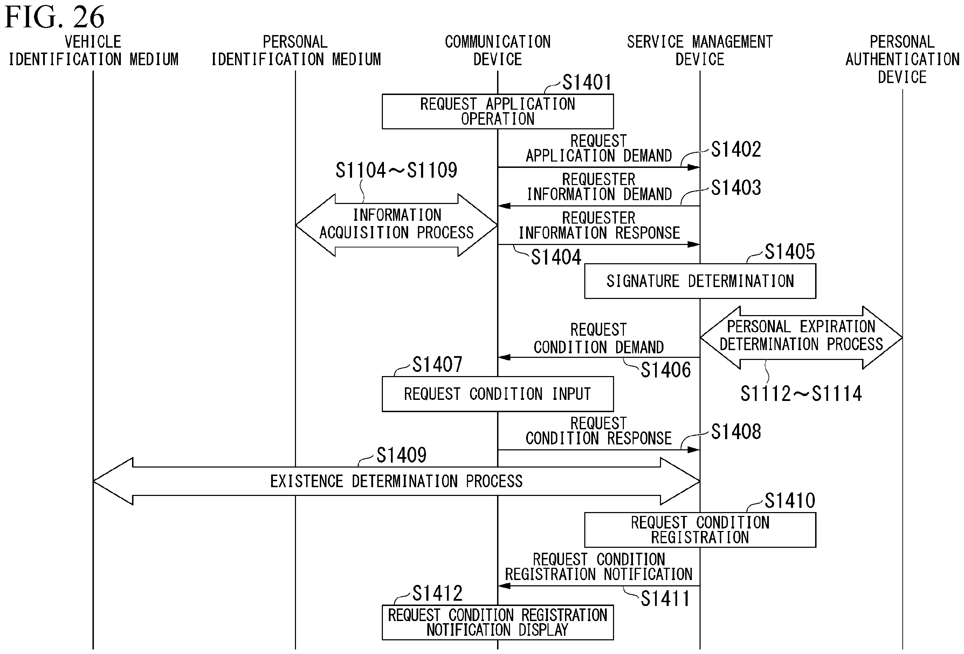

Next, FIG. 26 will be used to explain the processing flow when a substitute requester who wishes to request substitute driving of a vehicle 60 applies to make a request to the service management device 50. First, the substitute requester performs operations on the input unit 23 of the communication device 20 to apply for a request to the service management device 50 (step S1401). The communication device 20 transmits a request application demand to the service management device 50 in accordance with the operations by the substitute requester (step S1402). Upon receiving the request application demand, the service management device 50 transmits a requester information demand to the communication device 20 in accordance with the request application demand that has been received (step S1403). The requester information demand is a demand for identification information indicating the prospective requester requesting that the vehicle 60 be substitute-driven.

Next, an information acquisition process (steps S1104 to S1109) between the communication device 20 and the personal identification medium 10 is executed. By executing the information acquisition process, requester information is acquired from the personal identification medium 10 of the prospective requester. The communication device 20 transmits the requester information to the service management device 50 (step S1404). The service management device 50 determines whether or not there has been tampering of the first certificate in the requester information that has been received (step S1405). If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate that has been received. Regarding the first electronic certificate, a personal expiration determination process is executed in connection with the personal authentication device 30. The personal expiration determination process is similar to the process described in steps S1112 to S1114 and thus a description thereof will be omitted.

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 transmits a request condition demand to the communication device 20 (step S1406). The request condition demand is a demand for information indicating a condition relating to the request for substitute driving.

Upon receiving the request condition demand, the communication device 20 provides an output for prompting the substitute requester to input a condition relating to the request for the substitute driving service. For example, the communication device 20 displays a screen for inputting the condition on the output unit 24. The substitute requester inputs the condition for the request to the communication device 20 by operating the input unit 23 (step S 1407). The communication device 20 transmits, to the service management device 50, a request condition response indicating the condition for the request that has been input (step S1408).

Upon receiving the request condition response, the service management device 50 executes an existence determination process for a vehicle identification medium 70 associated with a vehicle 60 that has been registered for a substitute driving service (step S1409). The existence determination process is a process for confirming that the vehicle identification medium 70 associated with the vehicle 60 for the substitute driving service is in a usable state, for example, by transmitting a specific signal to the vehicle identification medium 70. If the vehicle 60 for the substitute driving service is confirmed to be in the usable state by the existence determination process, then the service management device 50 registers information indicating the received request condition, as provision application information 521, in the storage unit 52 (step S1410). Conversely, if the vehicle 60 for the substitute driving service is not confirmed to be in the usable state by the existence determination process, then the service management device 50 does not proceed any further with the process, and ends the process. In this case, the service management device 50 may notify the communication device 20 of an error. When the registration is completed, the service management device 50 notifies the communication device 20 that the registration of the request condition has been completed (step S1411). Upon receiving registration notification of the request condition, the communication device 20 outputs information indicating that the registration has been completed via the output unit 24. For example, the communication device 20 displays a screen indicating that the registration has been completed on the output unit 24 (step S1412).

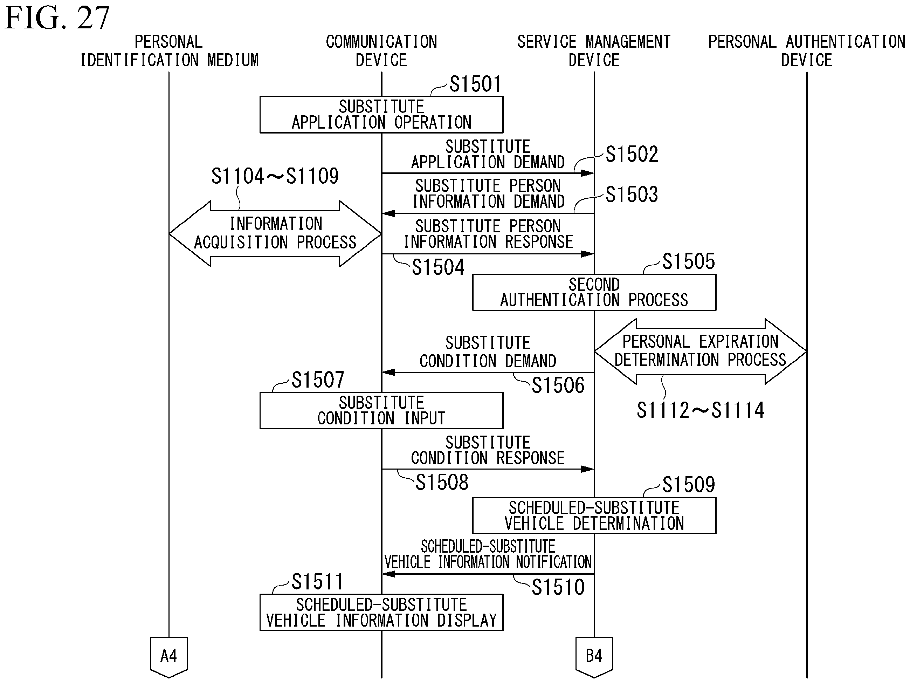

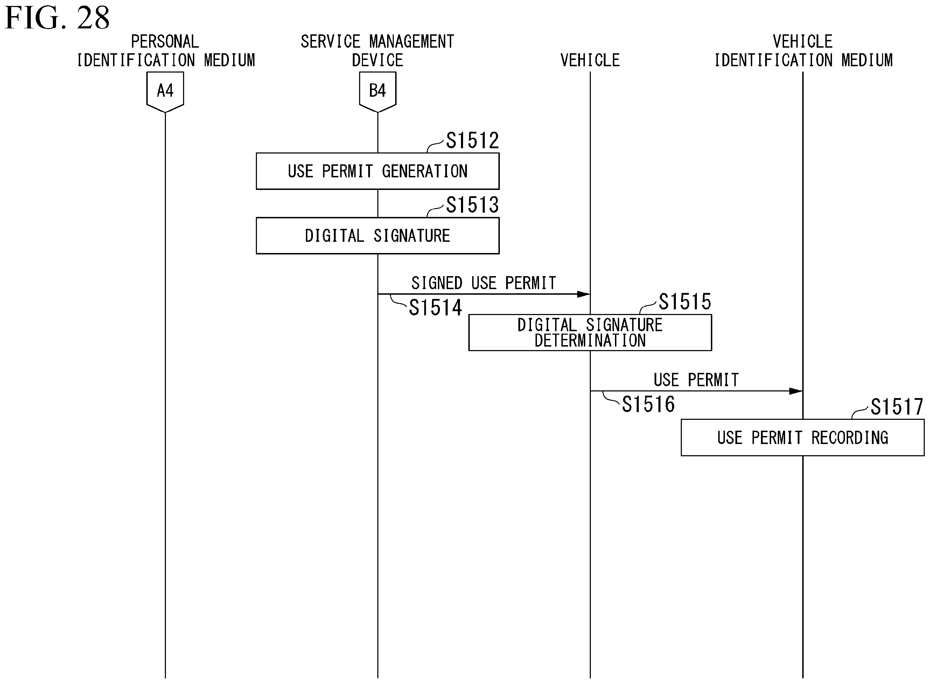

Next, FIG. 27 and FIG. 28 will be used to explain the processing flow when a substitute provider who wishes to substitute-drive a vehicle 60 applies for substitute driving to the service management device 50. It should be noted that in FIG. 27 and FIG. 28, the vehicle identification medium 70 is communicably connected with the first communication unit 61 of the vehicle 60. For example, if the first communication unit 61 is configured by using an on-board device, then the vehicle identification medium 70 may be in a state of remaining inserted in a physical interface, such as an insertion port, provided in the on-board device. First, a substitute provider performs operations on the input unit 23 of the communication device 20 to apply for substitution to the service management device 50 (step S1501). The communication device 20 transmits, to the service management device 50, a substitute application demand in accordance with the operations by the substitute provider (step S1502). Upon receiving the substitute application demand, the service management device 50 transmits, to the communication device 20, a substitute person information demand in accordance with the substitute application demand that has been received (step S1503). The substitute person information demand is a demand for identification information indicating the substitute provider.

Upon receiving the substitute person information demand, the communication device 20 uses the personal identification medium 10 of the substitute provider to acquire signed substitute person information by executing an information acquisition process. The process for acquiring the signed substitute person information is similar to steps S104 to S109 in FIG. 10. For this reason, a detailed description will be omitted. The communication device 20 transmits the signed substitute person information to the service management device 50 (step S1504). The service management device 50 determines whether or not there has been tampering of the signed substitute person information that has been received (step S1505). If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate included in the signed substitute person information that has been received. Regarding the first electronic certificate, a personal expiration determination process is executed in connection with the personal authentication device 30. The personal expiration determination process is similar to the process described in steps S1112 to S1114 and thus a description thereof will be omitted.

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 transmits a substitute condition demand to the communication device 20 (step S1506). The substitute condition demand is a demand for information indicating a condition relating to the substitute driving of the vehicle. The condition relating to substitute driving includes, for example, information (such as vehicle type and size) regarding the vehicle 60, information regarding the location of the substitute driving, and information indicating the time period of the substitute driving (e.g., information indicating a use starting date/time and a use ending date/time). The condition relating to substitute driving may further include other conditions.

Upon receiving the substitute condition demand, the communication device 20 provides an output for prompting the substitute provider to input a condition relating to the substitute driving of the vehicle. For example, the communication device 20 displays a screen for inputting the condition on the output unit 24. The substitute provider inputs the condition for substitute driving to the communication device 20 by operating the input unit 23 (step S1507). The communication device 20 transmits, to the service management device 50, a substitute condition response indicating the condition for substitute driving that has been input (step S1508).

Upon receiving the substitute condition response, the service management device 50 searches the provision application information 521 registered in the storage unit 52 for provision application information 521 satisfying the substitute condition that has been received. Furthermore, the service management device 50 selects one item of provision application information 521 from among the provision application information 521 satisfying the substitute condition, and determines the vehicle corresponding to the selected provision application information 521 as a scheduled-substitute vehicle (step S1509). The service management device 50 generates use application information 522 on the basis of the selected provision application information 521 and information regarding the substitute provider, and registers the same in the storage unit 52. Furthermore, the service management device 50 notifies the communication device 20 of information indicating the scheduled-substitute vehicle that has been determined (step S1510). Upon receiving information notification of the scheduled-substitute vehicle, the communication device 20 outputs information indicating the scheduled-substitute vehicle via the output unit 24. For example, the communication device 20 displays a screen indicating some or all of the use application information 522 on the output unit 24 (step S1511).

The service management device 50 generates a use permit on the basis of the use application information 522 (step S1512). The service management device 50 digitally signs the use permit that has been generated (step S1513). The service management device 50 transmits the signed use permit to the vehicle 60 that is a target for the use permit (step S1514). Thereafter, a public key in the service management device 50 and the digital signature are used to determine whether or not there has been tampering of the signed use permit that has been received (step S1515). As mentioned above, this determination process may be performed by the vehicle 60 or may be performed by the vehicle identification medium 70. If tampering has occurred, then the vehicle 60 suspends the process. Conversely, if tampering has not occurred, then the vehicle 60 performs an action for writing the use permit into the vehicle identification medium 70 that is connected thereto (step S1516). The control unit 73 of the vehicle identification medium 70 records the use permit in the storage unit 72 in accordance with control by the vehicle 60 (step S1517).

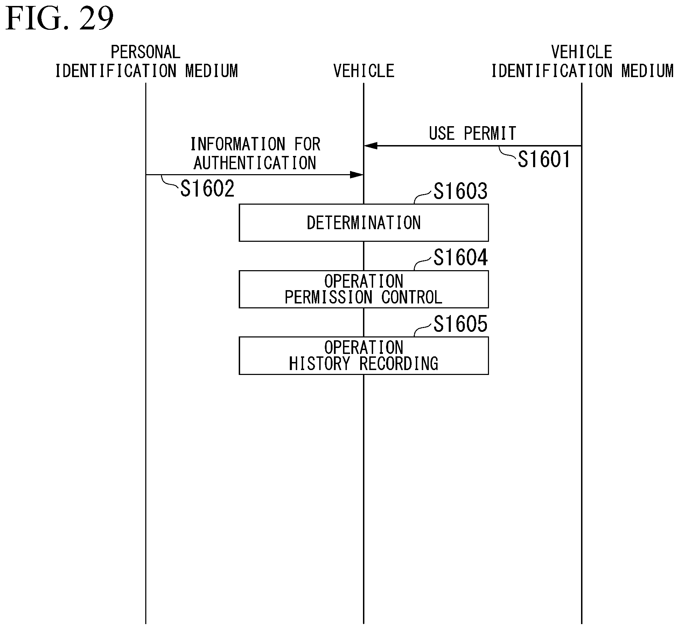

Next, FIG. 29 will be used to explain the processing flow when a substitute provider whose use application information 522 is already registered uses (substitute-drives) the vehicle 60. First, the substitute provider communicably connects, to the vehicle 60 that is to be provided for substitution, the personal identification medium 10 that was used when applying for substitution. Upon detecting that the personal identification medium 10 has been connected thereto, the vehicle 60 reads, from the vehicle identification medium 70 connected to the vehicle 60, the recorded use permit itself or information included in the use permit (step S1601). Additionally, the vehicle 60 reads information used for authentication (information for authentication) from the personal identification medium 10 of the user (the substitute provider) (step S1602).

If a prescribed condition indicating that the user (the substitute provider) is a legitimate user (the substitute provider to whom the use permit was issued) is satisfied, then the vehicle 60 determines that the use of the vehicle 60 will be permitted (step S1603). Conversely, if the prescribed condition mentioned above is not satisfied, then the vehicle 60 determines that the use thereof will not be permitted. The main control unit 651 of the vehicle 60 performs an action enabling the vehicle 60 to be used in accordance with the determination result (step S1604). When operation is permitted, the vehicle 60 records a history of the operation of the vehicle 60 by the substitute provider until the use by the substitute provider ends (step S1605). When the use by the substitute provider ends, the vehicle 60 transmits, to the service management device 50, the history of the operation recorded to that point. Upon receiving the history of the operation, the service management device 50 records information of the received history in the storage unit 52 as achievement information 523. It should be noted that the process indicated in FIG. 19 or FIG. 20 may be applied as a specific example of the process indicated in FIG. 29.

In the control system 100 applied to a substitute driving service in this manner also, advantageous effects similar to those obtained by the control system 100 applied to car sharing can be obtained. Additionally, the control system 100 applied to a substitute driving service in this manner may be modified in a manner similar to the control system 100 applied to car sharing. In this case, the existence determination process (step S409) indicated in FIG. 15 corresponds to the existence determination process (step S1409) indicated in FIG. 26. Additionally, the condition for executing the use member information registration in step S115 and the condition for generating the use permit in step S512 correspond respectively to the condition for executing the substitute member information registration in step S1115 and the condition for generating the use permit in step S1512.

### [Relay freight transportation]

Next, a specific example of the flow of actions when the control system 100 is applied to relay freight transportation will be explained. Relay freight transportation involves executing a relay with multiple drivers when moving at least one vehicle 60 by driving from one point (starting point) to another point (end point). In relay freight transportation, the person providing the vehicle 60 is a requester (freight transportation requester) requesting relay freight transportation. In relay freight transportation, the person using the vehicle 60 is a person who will drive the vehicle 60. Thus, in relay freight transportation, providing the vehicle 60 corresponds to requesting freight transportation and using the vehicle 60 corresponds to driving the vehicle 60.

In relay freight transportation, multiple relay points between the starting point and the end point, which are registered by the freight transportation requester, are set in the service management device 50. The multiple relay points may be set by the freight transportation requester or by the service management device 50. In the case in which the relay points are set by the service management device 50, the above relay points may be set, for example, from among points that are pre-registered in the service management device 50 as points at which vehicles can be easily parked, such as service areas. In this case, for example, the relay points may be automatically set so that the intervals between the starting point, the relay points, and the end point satisfy a prescribed condition. The prescribed condition may, for example, be a condition so that a required time period when moving at a predetermined normal speed satisfies a condition based on a reference value (e.g., within 10 minutes before or after the reference value), or a condition based on a predetermined distance (e.g., within 10 kilometers more or less than the distance). Additionally, the relay points may be set by dividing the distance from the starting point to the end point by a number set by the freight transportation requester so as to be divided into substantially equidistant intervals.

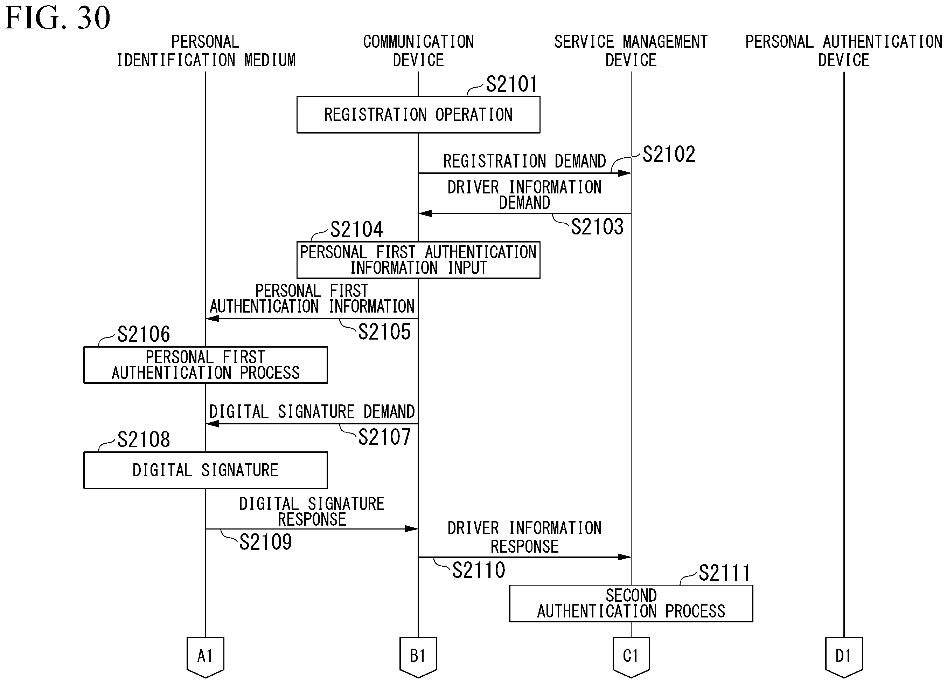

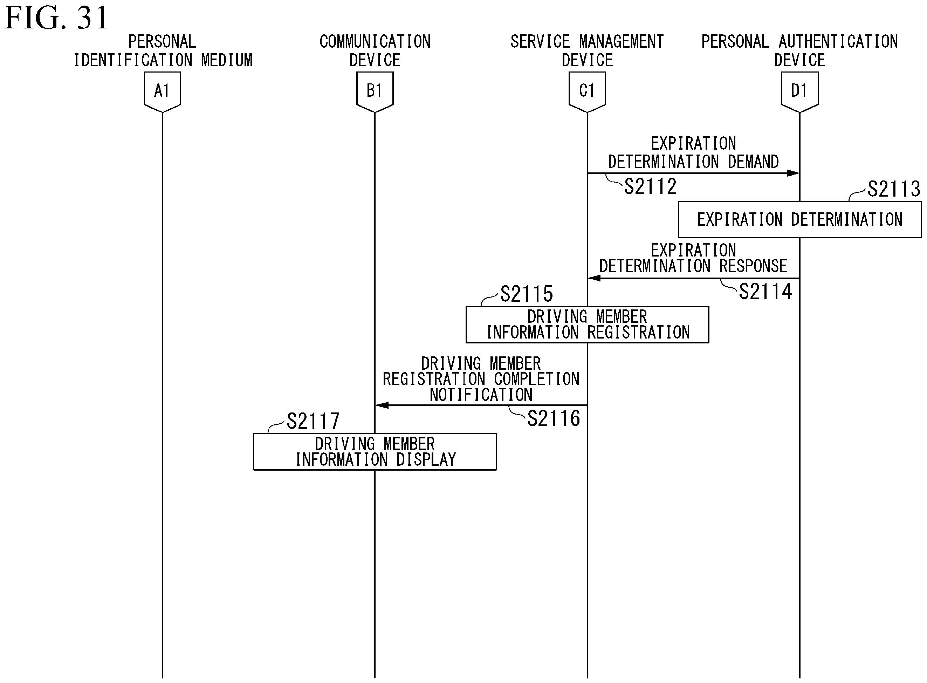

FIG. 30 to FIG. 38 are sequence charts illustrating a specific example of the flow of actions when the control system 100 is applied to relay freight transportation. First, FIG. 30 and FIG. 31 will be used to explain the processing flow when a prospective driver who wishes to participate in freight transportation registers with the service management device 50. The prospective driver is a person who wishes to drive a vehicle 60 owned by another person, by relay with other people, in relay freight transportation. Additionally, the service management device 50 may be operated by a mediating business or the like for connecting prospective drivers with freight transportation requesters to be described below in relay freight transportation. First, a prospective driver performs operations on the input unit 23 of the communication device 20 to register with the service management device 50 (step S2101). The communication device 20 transmits a registration demand to the service management device 50 in accordance with the operations by the prospective driver (step S2102). Upon receiving the registration demand, the service management device 50 transmits a driver information demand to the communication device 20 in accordance with the registration demand that has been received (step S2103). In relay freight transportation, the driver information demand is a demand for identification information (driver information) indicating the prospective driver. The driver information may, for example, be a first electronic certificate 121.

Upon receiving the driver information demand, the communication device 20 makes the output unit 24 output a display prompting the input of personal first authentication information. The prospective driver inputs the personal first authentication information by operating the input unit 23 (step S2104). The personal first authentication information may, for example, be a preset PIN code. The communication device 20 transmits the personal first authentication information that has been input by means of the input unit 23 to the personal identification medium 10 (step S2105). The personal identification medium 10 executes an authentication process on the basis of the personal first authentication information that has been received (step S2106). The communication device 20 demands, from the personal identification medium 10, a digital signature regarding the driver information to be registered (step S2107). The driver information to be registered is information regarding the prospective driver. The driver information may include information on the user (e.g., name, age, address, gender, etc.) input to the communication device 20 by the user. The driver information may include personal information included in the first electronic certificate 121.

If the prospective driver is authenticated as a result of the personal first authentication process in step S2106, then the personal identification medium 10 uses the first private key 122 to digitally sign the driver information to be registered in accordance with the demand in step S2107 (step S2108). The digital signature may be realized, for example, by using the first private key to perform an encryption process on a hash value obtained from the driver information. The personal identification medium 10 transmits, to the communication device 20, the driver information (signed driver information) that has been digitally signed (step S2109). The communication device 20 transmits the driver information received from the personal identification medium 10 to the service management device 50 (step S2110). The service management device 50 executes a second authentication process on the received driver information (step S2111). In the second authentication process, the service management device 50 determines whether or not there has been tampering of the driver information.

If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 transmits, to the personal authentication device 30, an expiration determination demand regarding the first electronic certificate included in the driver information that has been received (step S2112). Upon receiving the expiration determination demand, the personal authentication device 30 performs an expiration determination regarding the first electronic certificate that is being processed (step S2113). The personal authentication device 30 transmits an expiration determination response including the determination result of the expiration determination to the service management device 50 (step S2114).

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 registers, as driving member information in the storage unit 52, information such as the name and the address included in the driver information received in step S2110, and the personal information and first identification information included in the first electronic certificate (step S2115). The service management device 50 notifies the communication device 20 that the registration of the driving member information has been completed (step S2116). Upon receiving registration completion notification of the driving member information, the communication device 20 outputs information indicating that the registration has been completed via the output unit 24. For example, the communication device 20 displays a screen indicating that registration has been completed on the output unit 24 (step S2117).

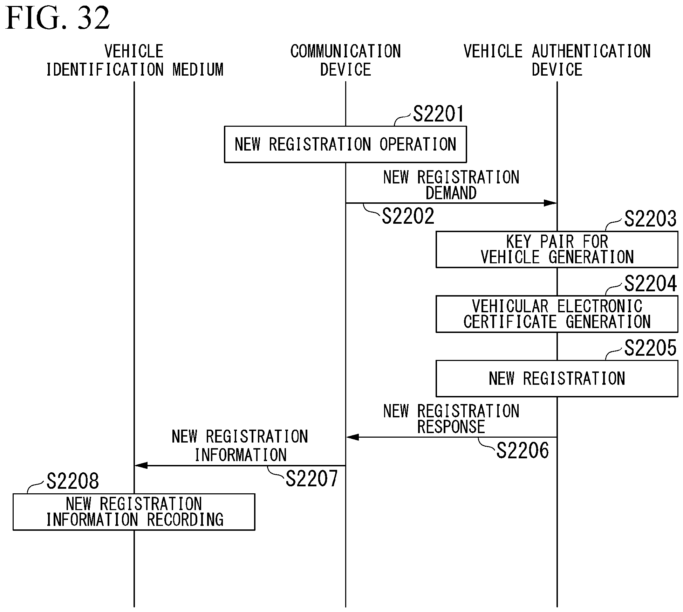

Next, FIG. 32 will be used to explain the processing flow for a freight transportation requester who wishes to request driving of a vehicle 60 to acquire a vehicular electronic certificate that will be necessary when registering with the service management device 50. The freight transportation requester is a person who wishes to request driving by another person (a prospective driver) who will drive a vehicle 60 owned by the freight transportation requester in relay freight transportation. First, the freight transportation requester performs operations on the input unit 23 of the communication device 20 to register with the vehicle authentication device 40 (step S2201). The communication device 20 transmits a new registration demand to the vehicle authentication device 40 in accordance with the operations by the freight transportation requester (step S2202). The process from step S2202 is similar to the process described from step S202 in FIG. 12. For this reason, a description thereof will be omitted.

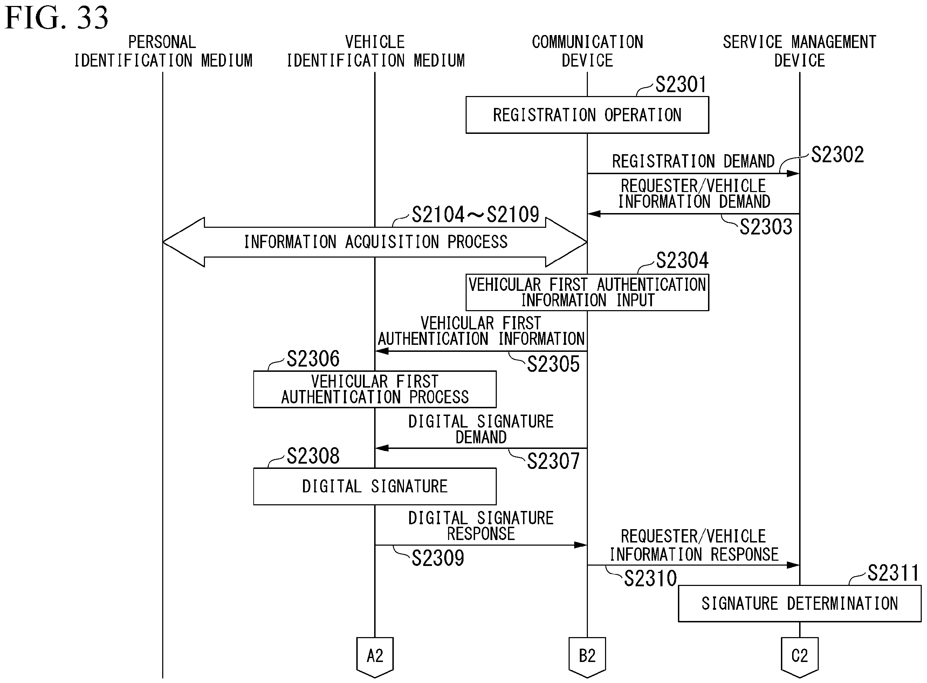

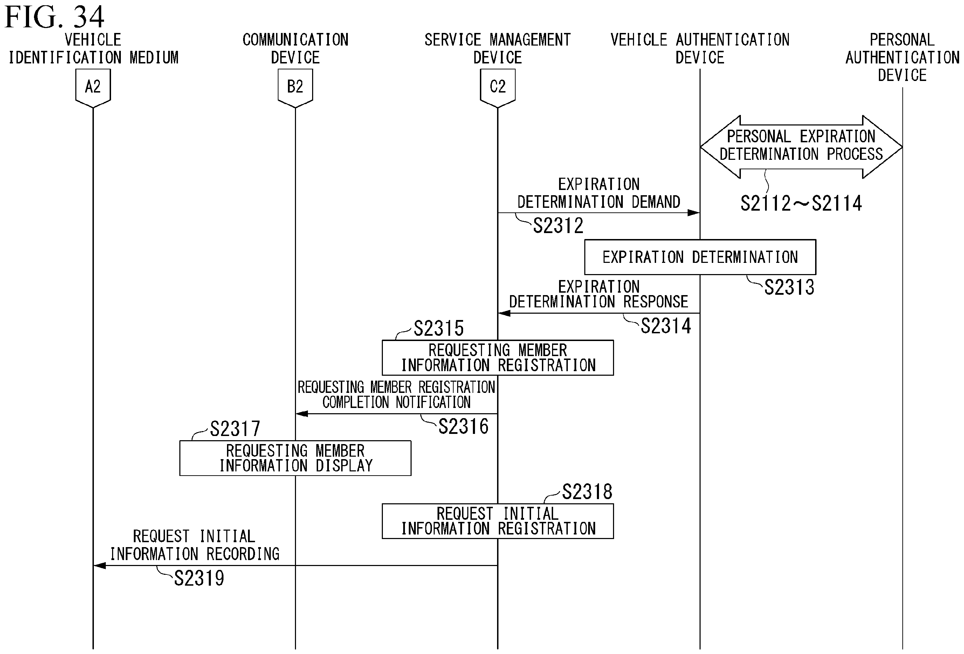

Next, FIG. 33 and FIG. 34 will be used to explain the processing flow when a freight transportation requester who wishes to request driving of a vehicle 60 registers with the service management device 50. First, the freight transportation requester performs operations on the input unit 23 of the communication device 20 to register with the service management device 50 (step S2301). The communication device 20 transmits a registration demand to the service management device 50 in accordance with the operations by the freight transportation requester (step S2302). Upon receiving the registration demand, the service management device 50 transmits, to the communication device 20, a requester/vehicle information demand in accordance with the registration demand that has been received (step S2303). The requester/vehicle information demand is a demand for identification information indicating the freight transportation requester and identification information indicating the vehicle that is to be driven.

Upon receiving the requester/vehicle information demand, the communication device 20 uses the personal identification medium 10 of the freight transportation requester to acquire signed requester information by executing an information acquisition process. The signed requester information is requester information that has been digitally signed by using a first private key. The process for acquiring the signed requester information is similar to the process for acquiring signed driver information in steps S2104 to S2109 in FIG. 30. For this reason, a detailed description will be omitted. It should be noted that the requester information is information regarding the substitute requester. The requester information may include information on the user (e.g., name, age, address, gender, etc.) input to the communication device 20 by the user. The requester information may include personal information included in the first electronic certificate 121.

Additionally, the communication device 20 makes the output unit 24 output a display prompting the input of vehicular first authentication information. The freight transportation requester inputs vehicular first authentication information by operating the input unit 23 (step S2304). The vehicular first authentication information may, for example, be a preset PIN code. The communication device 20 transmits, to the vehicle identification medium 70, the vehicular first authentication information input via the input unit 23 (step S2305). The vehicle identification medium 70 executes a vehicular first authentication process on the basis of the vehicular first authentication information that has been received (step S2306). The communication device 20 demands a digital signature from the vehicle identification medium 70 (step S2307). At this time, the communication device 20 generates, for example, a random number or an electronic document (or a hash value thereof) used for a digital signature, and transmits the same to the vehicle identification medium 70.

If the freight transportation requester is authenticated as a result of the authentication process in step S2306, then the vehicle identification medium 70, in response to the demand in step S2307, uses the vehicle private key 725 to digitally sign the data (a random number, an electronic document, a hash value, etc.) transmitted from the communication device 20 (step S2308). The vehicle identification medium 70 transmits, to the communication device 20, a digital signature response including the digitally signed data and a vehicular electronic certificate (step S2309). The communication device 20 transmits, to the service management device 50, the digital signature response received from the vehicle identification medium 70 and the requester information of the freight transportation requester acquired in the information acquisition process (step S2310). The service management device 50 determines whether or not there has been tampering of the first electronic certificate in the requester information and the vehicular electronic certificate that have been received (step S2311).

If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate and the vehicular electronic certificate that have been received. Regarding the first electronic certificate, a personal expiration determination process is executed in connection with the personal authentication device 30. The personal expiration determination process is similar to the process described in steps S2112 to S2114 and thus a description thereof will be omitted. Regarding the vehicular electronic certificate, an expiration determination demand is transmitted to the vehicle authentication device 40 (step S2312). Upon receiving the expiration determination demand, the vehicle authentication device 40 performs an expiration determination regarding the vehicular electronic certificate that is being processed (step S2313). The vehicle authentication device 40 transmits, to the service management device 50, an expiration determination response including the determination result of the expiration determination (step S2314).

If either of the expiration determination results indicate expiration, then the service management device 50 does not proceed any further with the process, and ends the process. In this case, the service management device 50 may notify the communication device 20 of an error. Conversely, if neither of the expiration determination results indicate expiration, then the service management device 50 registers, as requesting member information in the storage unit 52, the requester information received in step S2310 and vehicle identification information included in the vehicular electronic certificate (step S2315). The service management device 50 notifies the communication device 20 that the registration of the requesting member information has been completed (step S2316). Upon receiving registration completion notification of the requesting member information, the communication device 20 outputs information indicating that registration has been completed via the output unit 24. For example, the communication device 20 displays a screen indicating that registration has been completed on the output unit 24 (step S2317). Additionally, the service management device 50 registers request initial information in the storage unit 52 (step S2318). The request initial information includes key information 524. For example, at the time of this step S2318, the service management device 50 may generate key information 524 for the freight transportation requester, and may store the key information 524 in association with the first electronic certificate 121 of the freight transportation requester and/or the vehicular electronic certificate. The service management device 50 records the request initial information in the vehicle identification medium 70 (step S2319). At this time, the vehicle identification medium 70 may, for example, have a service AP 727, a service private key 728, and a public key of the service management device 50 recorded therein. In particular, the service private key 728 should preferably be recorded in the vehicle identification medium 70 by using a secure means.

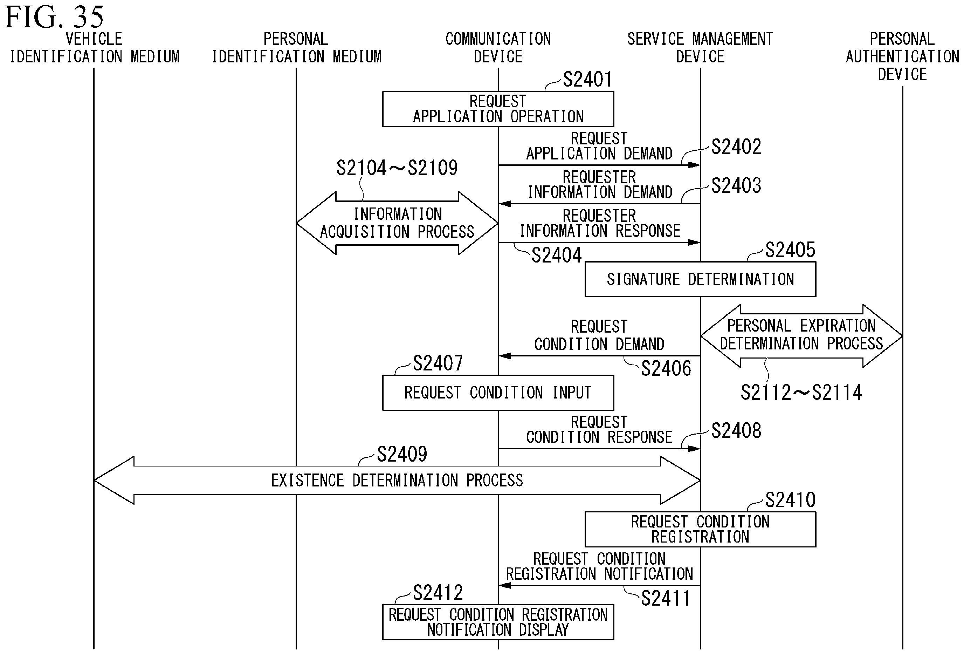

Next, FIG. 35 will be used to explain the processing flow when a freight transportation requester who wishes to request driving of a vehicle 60 applies to make a request to the service management device 50. First, the freight transportation requester performs operations on the input unit 23 of the communication device 20 to apply for a request to the service management device 50 (step S2401). The communication device 20 transmits a request application demand to the service management device 50 in accordance with the operations by the freight transportation requester (step S2402). Upon receiving the request application demand, the service management device 50 transmits a requester information demand to the communication device 20 in accordance with the request application demand that has been received (step S2403). The requester information demand is a demand for identification information indicating the prospective requester requesting that the vehicle 60 to be driven.

Next, an information acquisition process (steps S2104 to S2109) between the communication device 20 and the personal identification medium 10 is executed. By executing the information acquisition process, requester information is acquired from the personal identification medium 10 of the prospective requester. The communication device 20 transmits the requester information to the service management device 50 (step S2404). The service management device 50 determines whether or not there has been tampering of the first certificate in the requester information that has been received (step S2405). If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate that has been received. Regarding the first electronic certificate, a personal expiration determination process is executed in connection with the personal authentication device 30. The personal expiration determination process is similar to the process described in steps S2112 to S2114 and thus a description thereof will be omitted.

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 transmits a request condition demand to the communication device 20 (step S2406). The request condition demand is a demand for information indicating a condition relating to the request for driving.

Upon receiving the request condition demand, the communication device 20 provides an output for prompting the freight transportation requester to input a condition relating to the request for driving. For example, the communication device 20 displays a screen for inputting the condition on the output unit 24. The freight transportation requester inputs the condition for the request to the communication device 20 by operating the input unit 23 (step S2407). The communication device 20 transmits, to the service management device 50, a request condition response indicating the condition for the request that has been input (step S2408).

Upon receiving the request condition response, the service management device 50 executes an existence determination process for a vehicle identification medium 70 associated with a vehicle 60 that has been registered to be driven (step S2409). The existence determination process is a process for confirming that the vehicle identification medium 70 associated with the target vehicle 60 is in a usable state, for example, by transmitting a specific signal to the vehicle identification medium 70. If the target vehicle 60 is confirmed to be in the usable state by the existence determination process, then the service management device 50 registers information indicating the received request condition, as provision application information 521, in the storage unit 52 (step S2410). Conversely, if the target vehicle 60 is not confirmed to be in the usable state by the existence determination process, then the service management device 50 does not proceed any further with the process, and ends the process. In this case, the service management device 50 may notify the communication device 20 of an error. When the registration is completed, the service management device 50 notifies the communication device 20 that the registration of the request condition has been completed (step S2411). Upon receiving registration notification of the request condition, the communication device 20 outputs information indicating that the registration has been completed via the output unit 24. For example, the communication device 20 displays a screen indicating that the registration has been completed on the output unit 24 (step S2412).

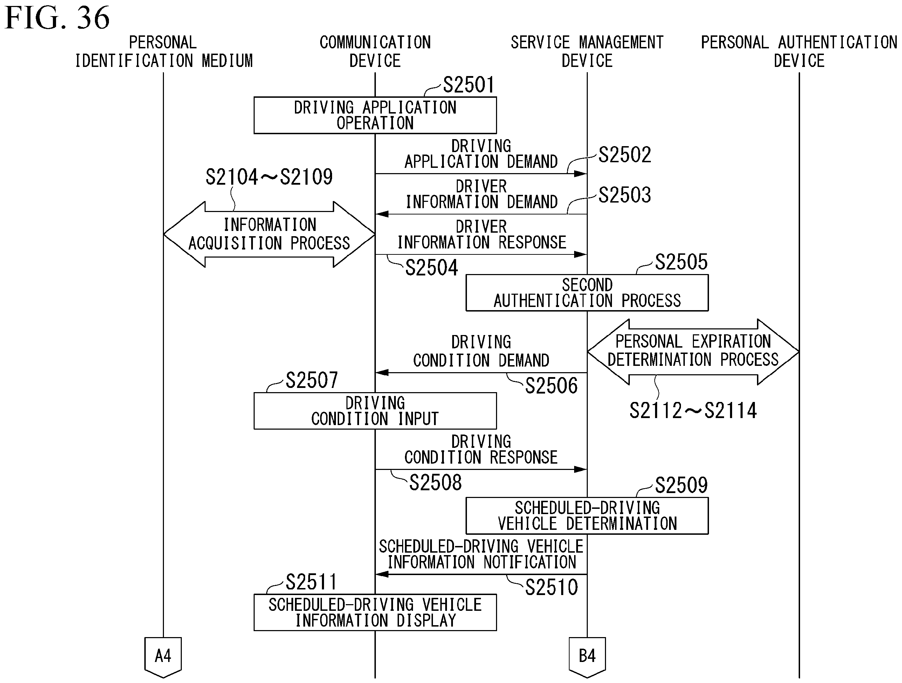

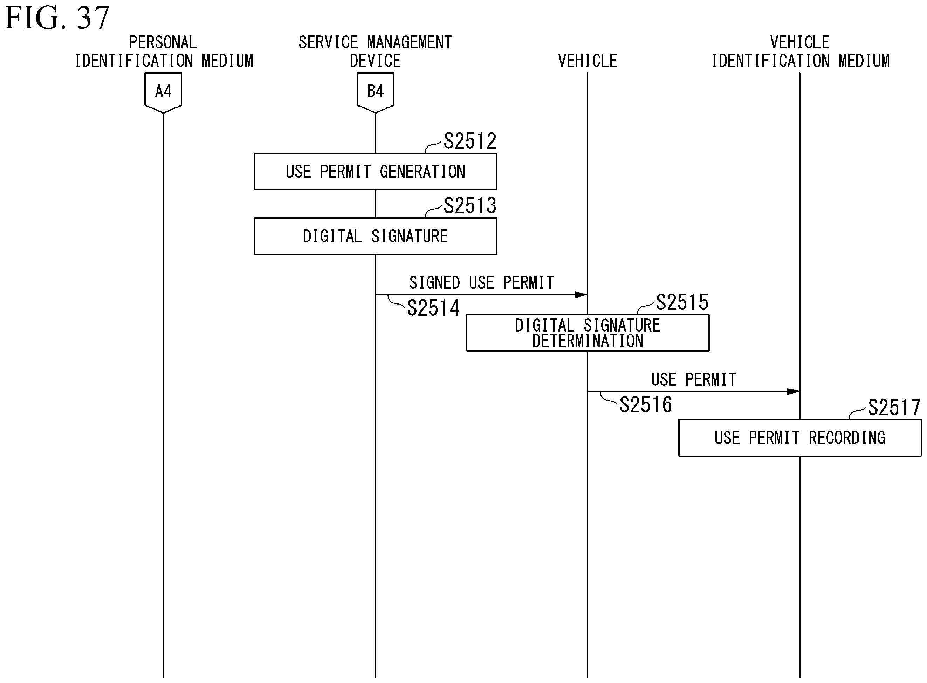

Next, FIG. 36 and FIG. 37 will be used to explain the processing flow when a prospective driver who wishes to drive the vehicle 60 applies for driving to the service management device 50. It should be noted that in FIG. 36 and FIG. 37, the vehicle identification medium 70 is communicably connected with the first communication unit 61 of the vehicle 60. For example, if the first communication unit 61 is configured by using an on-board device, then the vehicle identification medium 70 may be in a state of remaining inserted in a physical interface, such as an insertion port, provided in the on-board device. First, a prospective driver performs operations on the input unit 23 of the communication device 20 to apply for driving to the service management device 50 (step S2501). The communication device 20 transmits, to the service management device 50, a driving application demand in accordance with the operations by the prospective driver (step S2502). Upon receiving the driving application demand, the service management device 50 transmits, to the communication device 20, a driver information demand in accordance with the driving application demand that has been received (step S2503). The driver information demand is a demand for identification information indicating the prospective driver.

Upon receiving the driver information demand, the communication device 20 uses the personal identification medium 10 of the prospective driver to acquire signed driver information by executing an information acquisition process. The process for acquiring the signed driver information is similar to steps S104 to S109 in FIG. 10. For this reason, a detailed description will be omitted. The communication device 20 transmits the signed driver information to the service management device 50 (step S2504). The service management device 50 determines whether or not there has been tampering of the signed driver information that has been received (step S2505). If it is determined that tampering has occurred, then the service management device 50 does not proceed any further with the process, and ends the process. In this case, the service management device 50 may notify the communication device 20 of an error. Conversely, if it is determined that tampering has not occurred, then the service management device 50 performs an expiration determination regarding the first electronic certificate included in the signed driver information that has been received. Regarding the first electronic certificate, a personal expiration determination process is executed in connection with the personal authentication device 30. The personal expiration determination process is similar to the process described in steps S2112 to S2114 and thus a description thereof will be omitted.

If the expiration determination result indicates expiration, then the service management device 50 does not proceed any further with the process, and ends the process. In this case, the service management device 50 may notify the communication device 20 of an error. Conversely, if the expiration determination result does not indicate expiration, then the service management device 50 transmits a driving condition demand to the communication device 20 (step S2506). The driving condition demand is a demand for information indicating a condition relating to the driving of the vehicle. The condition relating to driving includes, for example, information (such as vehicle type and size) regarding the vehicle 60, information regarding the location of the driving, and information indicating the time period of the driving (e.g., information indicating a use starting date/time and a use ending date/time). The condition relating to driving may further include other conditions.

Upon receiving the driving condition demand, the communication device 20 provides an output for prompting the prospective driver to input a condition relating to the driving of the vehicle. For example, the communication device 20 displays a screen for inputting the condition on the output unit 24. The prospective driver inputs the condition for driving to the communication device 20 by operating the input unit 23 (step S2507). The communication device 20 transmits, to the service management device 50, a driving condition response indicating the condition for driving that has been input (step S2508).

Upon receiving the driving condition response, the service management device 50 searches the provision application information 521 registered in the storage unit 52 for provision application information 521 satisfying the driving condition that has been received. Furthermore, the service management device 50 selects one item of provision application information 521 from among the provision application information 521 satisfying the driving condition, and determines the vehicle corresponding to the selected provision application information 521 as a scheduled-driving vehicle (step S2509). The service management device 50 generates use application information 522 on the basis of the selected provision application information 521 and information regarding the prospective driver, and registers the same in the storage unit 52. Furthermore, the service management device 50 notifies the communication device 20 of information indicating the scheduled-driving vehicle that has been determined (step S2510). Upon receiving information notification of the scheduled-driving vehicle, the communication device 20 outputs information indicating the scheduled-driving vehicle via the output unit 24. For example, the communication device 20 displays a screen indicating some or all of the use application information 522 on the output unit 24 (step S2511).

The service management device 50 generates a use permit on the basis of the use application information 522 (step S2512). The service management device 50 digitally signs the use permit that has been generated (step S2513). The service management device 50 transmits the signed use permit to the vehicle 60 that is a target for the use permit (step S2514). Thereafter, a public key in the service management device 50 and the digital signature are used to determine whether or not there has been tampering of the signed use permit that has been received (step S2515). As mentioned above, this determination process may be performed by the vehicle 60 or may be performed by the vehicle identification medium 70. If tampering has occurred, then the vehicle 60 suspends the process. Conversely, if tampering has not occurred, then the vehicle 60 performs an action for writing the use permit into the vehicle identification medium 70 that is connected thereto (step S2516). The control unit 73 of the vehicle identification medium 70 records the use permit in the storage unit 72 in accordance with control by the vehicle 60 (step S2517).

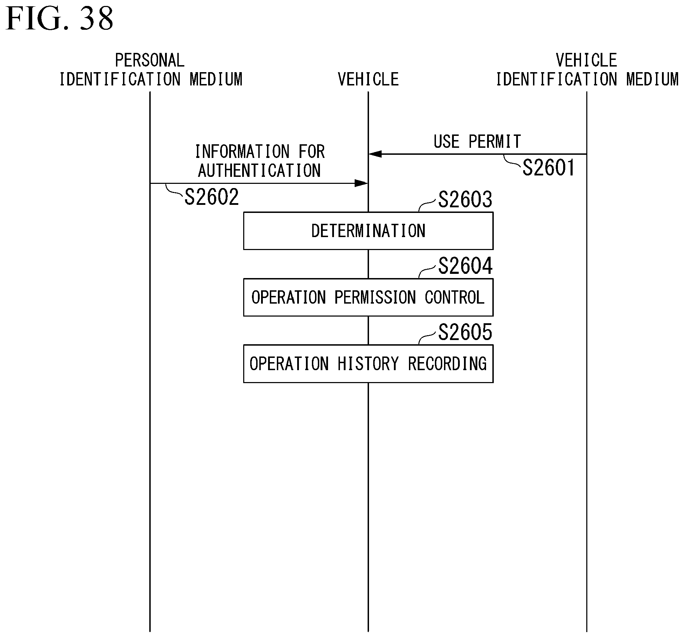

Next, FIG. 38 will be used to explain the processing flow when a prospective driver whose use application information 522 is already registered uses (drives) a vehicle 60. First, the prospective driver communicably connects, to the vehicle 60 that is to be provided, the personal identification medium 10 that was used when applying for driving. Upon detecting that the personal identification medium 10 has been connected thereto, the vehicle 60 reads, from the vehicle identification medium 70 connected to the vehicle 60, the recorded use permit itself or information included in the use permit (step S2601). Additionally, the vehicle 60 reads information used for authentication (information for authentication ) from the personal identification medium 10 of the user (the prospective driver) (step S2602).

If a prescribed condition indicating that the user (the prospective driver) is a legitimate user (the prospective driver to whom the use permit was issued) is satisfied, then the vehicle 60 determines that the use of the vehicle 60 will be permitted (step S2603). Conversely, if the prescribed condition mentioned above is not satisfied, then the vehicle 60 determines that the use thereof will not be permitted. The main control unit 651 of the vehicle 60 performs an action enabling the vehicle 60 to be used in accordance with the determination result (step S2604). When operation is permitted, the vehicle 60 records a history of the operation of the vehicle 60 by the prospective driver until the use by the prospective driver ends (step S2605). When the use by the prospective driver ends, the vehicle 60 transmits, to the service management device 50, the history of the operation recorded to that point. Upon receiving the history of the operation, the service management device 50 records information of the received history in the storage unit 52 as achievement information 523. It should be noted that the process indicated in FIG. 19 or FIG. 20 may be applied as a specific example of the process indicated in FIG. 38.

In the control system 100 applied to relay freight transportation in this manner, advantageous effects similar to those obtained by the control system 100 applied to car sharing can be obtained. Additionally, the control system 100 applied to relay freight transportation in this manner may be modified in a manner similar to the control system 100 applied to car sharing. In this case, the existence determination process (step S409) indicated in FIG. 15 corresponds to the existence determination process (step S2409) indicated in FIG. 35. Additionally, the condition for executing the use member information registration in step S115 and the condition for generating the use permit in step S512 correspond respectively to the condition for executing the driving member information registration in step S2115 and the condition for generating the use permit in step S2512.

Although embodiments of this invention have been explained in detail above with reference to the drawings, the specific configurations are not limited to those of these embodiments, and designs or the like within a range not departing from the gist of the present invention are also included.

### INDUSTRIAL APPLICABILITY

The present invention can be applied to control technology for use of vehicles.

### Description of Reference Signs

- 100: Control system
- 10: Personal identification medium
- 121: First electronic certificate
- 122: First private key
- 123: Second electronic certificate
- 124: Second private key
- 131: Communication control unit
- 132: Encryption unit
- 20: Communication device
- 300: Personal authentication agency
- 30: Personal authentication device
- 321: Personal electronic certificate information
- 322: Expiration information
- 331: Certification control unit
- 332: Expiration determination unit
- 400: Vehicle authentication agency
- 40: Vehicle authentication device
- 421: Vehicular electronic certificate information
- 422: Expiration information
- 431: Certification control unit
- 432: Expiration determination unit
- 50: Service management device
- 521: Provision application information
- 522: Use application information
- 523: Achievement information
- 524: Key information
- 531: Information acquisition unit
- 532: Determination unit
- 533: Use permit generation unit
- 534: Achievement management unit
- 60: Vehicle
- 70: Vehicle identification medium
- 721: Vehicle identification information
- 722: Vehicle attribute information
- 723: Owner information
- 724: Vehicular electronic certificate
- 725: Vehicle private key
- 726: Use permit information
- 727: Service AP
- 728: Service private key

## Claims

1. A vehicle control system comprising:
a determination unit that determines one scheduled-use vehicle from among candidate vehicles satisfying a use condition applied by a prospective user wishing to use a vehicle;
a use permit generation unit that generates a use permit including user information that is information specific to a user of a vehicle and permission application information indicating permitted content for an application regarding use of the scheduled-use vehicle determined by the determination unit;
an encryption unit that electronically signs the use permit by using a prescribed private key;
a storage medium that stores the electronically signed use permit if the use permit has been determined to satisfy a prescribed condition indicating that the use permit is a legitimate use permit by using a public key corresponding to the private key; and
a vehicle control unit that performs an action enabling a prospective user who is trying to use a vehicle determined by the determination unit to operate the vehicle on the basis of the permission application information if information stored in a personal identification medium that stores user information of the prospective user or information paired with user information and the user information included in the use permit stored in the storage medium satisfy a prescribed condition.

2. The vehicle control system according to claim 1, wherein the storage medium is a storage medium in which electronic information indicating an automobile inspection certificate regarding the vehicle is recorded.
